# EUROPÄISCHE PATENTSCHRIFT

(11) **EP 3 618 975 B1**
(45) Veröffentlichungstag und Bekanntmachung des Hinweises auf die Patenterteilung: **26.05.2021**
(21) Anmeldenummer: 18719559.9
(22) Anmeldetag: 23.04.2018
(51) Int. Cl.: B07C 5/344

(54) **SORTIERUNGSVERFAHREN FÜR ALUMINIUMPAKETE UND SORTIERANLAGE**
METHOD AND APPARATUS FOR SORTING ALUMINIUM PACKAGES
PROCÉDÉ ET DISPOSITIF DE TRI DES PAQUETS EN ALUMINIUM

(30) Priorität: 04.05.2017 DE 102017109610
(43) Veröffentlichungstag der Anmeldung: 11.03.2020
(73) Patentinhaber: Hydro Aluminium Rolled Products GmbH, 41515 Grevenbroich (DE)
(72) Erfinder: KURTH, Boris, 41564 Kaarst (DE); GILLNER, Ronald, 53913 Swisttal (DE); BAUERSCHLAG, Nils Robert, 52072 Aachen (DE)
(74) Vertreter: Cohausz & Florack
(86) Internationale Anmeldenummer: PCT/EP2018/060349
(87) Internationale Veröffentlichungsnummer: WO 2018/202460

(56) Entgegenhaltungen:
- DE-A1-102014 013 160

## Beschreibung

Die Erfindung betrifft ein Sortierungsverfahren für Aluminiumpakete, bei dem ein Aluminiumpaket bereitgestellt wird, in dem flächige Aluminiumlegierungsschrottteile verpresst sind. Die Erfindung betrifft ferner eine Sortieranlage für die Sortierung dieser paketierten Schrotte, Aluminiumpakete.

Verfahren zur Sortierung von Aluminiumschrott sind im Stand der Technik zum Beispiel aus der WO 2009/152290 A1 bekannt. Bei dem dort offenbarten Verfahren werden aluminiumhaltige Partikel in zwei Fraktionen unterteilt, indem die Partikel im Einwirkungsfeld eines Wirbelstromgenerators entweder ausgelenkt werden oder nicht.

Eine genaue Identifizierung der Aluminiumlegierung anhand der elektrischen Leitfähigkeit ist mit diesem Verfahren nicht möglich.

Zur Behebung dieses Nachteils ist in der EP 3 133 176 A1 ein Verfahren zur Aluminiumschrott-Sortierung offenbart, bei dem der Aluminiumschrott zunächst zerkleinert und vergleichmäßigt wird und alsdann die Aluminiumschrottpartikel einer elektrischen Leitfähigkeitsmessung unterzogen werden. In Abhängigkeit der erfassten elektrischen Leitfähigkeit werden die einzelnen Partikel aus dem Volumenstrom aussortiert und in Fraktionen unterteilt. Hierdurch lässt sich vergleichsweise exakt bestimmen, welcher Partikel welche elektrische Leitfähigkeit aufweist, so dass im Nachgang gezielt aussortiert werden kann und es möglich ist, zwischen einzelnen Aluminium-Legierungen zu unterscheiden.

Obwohl sich dieses Verfahren im praktischen Einsatz bewährt hat, besteht Interesse an einer Verbesserung. Insbesondere setzt die Messung der elektrischen Leitfähigkeit voraus, dass der Kontakt zwischen Messsensoren einerseits und zu messenden Partikel andererseits möglichst gut, das heißt vollflächig ausgebildet ist. Bei der Messung von Partikeln ist dies relativ unwahrscheinlich, da die Partikel aufgrund ihrer Zerkleinerung keine plane Oberfläche bereitstellen, auf die der Messsensor aufgelegt werden kann. Darüber hinaus ist die vorherige Zerkleinerung des Aluminiumschrotts mit erheblichem Materialverlust in Form von Abrieb und Materialverschleiß der Zerkleinerungsmaschinen verbunden. Der Wartungs- und Reparaturaufwand solcher Zerkleinerungsmaschinen ist daher enorm.

Ein weiteres Verfahren zur Sortierung von wiederverwertbaren Rohstoffstücken ist aus der DE 10 2014 013 160 A1 bekannt.

Ausgehend von den vorbeschriebenen Nachteilen ist es daher die Aufgabe der Erfindung, ein Verfahren und eine Sortieranlage anzugeben, mit welchen eine Sortierung von Aluminiumschrott wirtschaftlich und mit hoher Präzision und materialschonend möglich ist.

Zur Lösung dieser Aufgabe schlägt die Erfindung zum einen ein Sortierungsverfahren für Aluminiumpakete vor, bei dem
- ein Aluminiumpaket bereitgestellt wird, in dem flächige Aluminiumlegierungsschrottteile verpresst sind,
- eine Materialeigenschaft an der Oberfläche des Aluminiumpakets bestimmt wird,
- das Aluminiumpaket in Abhängigkeit der zuvor bestimmten Materialeigenschaft sortiert wird.

In vollständiger Abkehr zum bisherigen Stand der Technik wird der zu Paketen verpresste Aluminiumlegierungsschrott nicht zerkleinert. Dies hat den Vorteil, dass ein solches Paket außenumfangseitig im Wesentlichen plane Flächen bereitstellt. Diese können von Messsensoren gut kontaktiert bzw. vermessen werden, so dass die Wahrscheinlichkeit von Fehlmessungen minimiert ist. Erfindungsgemäß werden also nicht einzelne Partikel gemessen. Stattdessen wird das Paket an sich vermessen. Dabei macht sich die Erfindung zu Nutze, dass die Aluminiumlegierungsschrotte in der Regel aus der Automobilindustrie stammen. Diese Schrotte fallen in Form von flächigen Aluminiumlegierungsschrottteilen, insbesondere Stanzabfällen, insbesondere in Form von Blechen, an. Das erfindungsgemäße Verfahren ist nicht darauf beschränkt, dass die Aluminiumpakete ausschließlich aus flächigen Aluminiumlegierungsschrottteilen bestehen. Jedoch ist das erfindungsgemäße Verfahren umso effektiver, je größer der Anteil der flächigen Aluminiumlegierungsschrottteile an der Gesamtzusammensetzung des Paketes ist. Es ist deshalb bevorzugt, dass ein Paket zum überwiegenden Teil aus flächigen Aluminiumlegierungsschrottteilen besteht Weiter bevorzugt beträgt der Anteil der flächigen Aluminiumlegierungsschrottteile an der Gesamtmasse des Paketes wenigstens 60 Gew.-%, weiter bevorzugt wenigstens 70 Gew.-%, weiter bevorzugt wenigstens 80 % Gew.-%, weiter bevorzugt wenigstens 90 Gew.-% und besonders bevorzugt wenigstens 95 Gew.-%. Je höher dieser Anteil ist, desto genauer ist das Ergebnis des erfindungsgemäßen Verfahrens.

Es wurde erkannt, dass die Vermessung von an der Oberfläche eines Aluminiumpakets liegenden Aluminiumlegierungsschrottteilen häufig eine recht zuverlässige Abschätzung über die im gesamten Aluminiumpaket verpressten Aluminiumlegierungsschrottteile ermöglicht. Dies gilt insbesondere für relativ große flächige Aluminiumlegierungsschrottteile, wie sie insbesondere in der Automobilindustrie anfallen, da große verpresste flächige Aluminiumlegierungsschrottteile mit höherer Wahrscheinlichkeit zumindest abschnittsweise auch an der Oberfläche eines Aluminiumpakets liegen.

Daher kann durch die Messung einer Materialeigenschaft, insbesondere der elektrischen Leitfähigkeit oder ein oder mehrerer Legierungselement-Gehalte, an der Oberfläche eines Aluminiumpakets eine gute Sortierung bzw. Vorsortierung von Aluminiumpaketen durchgeführt werden, ohne dass ein Zerkleinern der Aluminiumpakete bzw. ein Vereinzeln der in den Aluminiumpaketen verpressten Aluminiumschrottteile erforderlich ist.

Die Messung einer Materialeigenschaft an der Oberfläche des Aluminiumpakets umfasst insbesondere eine Interaktion, insbesondere mittels Kraft oder Strahlung, mit der Materie im Bereich der Oberfläche des Aluminiumpakets.

Die Aluminiumlegierungsschrottteile bestehen dabei im Wesentlichen aus verschiedenen Aluminiumlegierungen. Dabei meint der Ausdruck "im Wesentlichen" im Sinne der Erfindung, dass die Schrottteile in geringem Maße Fremdmaterialien aufweisen können. Dies sind insbesondere Lackreste und dergleichen. Es ist für die Erfindung ferner von Vorteil, wenn ein im Pressblock verpresster Aluminiumlegierungsschrottteil für sich genommen nur Aluminiumlegierungen aufweist, die zu der gleichen Gruppe gehören. Die Erfindung ist nicht darauf beschränkt, jedoch ist es insofern von Vorteil, da die Genauigkeit des Verfahrens erhöht wird, wenn so wenige Aluminiumlegierungen unterschiedlicher Gruppen in einem Schrottteil vorkommen, wie möglich. Verschiedene Aluminiumlegierungsschrottteile innerhalb des Paketes können indes aus Aluminiumlegierungen bestehen, die unterschiedlichen Legierungsgruppen angehören.

Für die Bezeichnung von Aluminiumlegierungsgruppen wird im Folgenden die übliche Schreibweise 1xxx, 2xxx usw. verwendet, wie dies insbesondere in der europäischen Norm EN 573-1 definiert ist.

Bei dem Sortierungsverfahren kann als Materialeigenschaft insbesondere die elektrische Leitfähigkeit an der Oberfläche des Aluminiumpakets gemessen werden. Entsprechend schlägt die Erfindung insbesondere ein Sortierungsverfahren für Aluminiumpakete vor, bei dem
- ein Aluminiumpaket bereitgestellt wird, in dem flächige Aluminiumlegierungsschrottteile verpresst sind,
- die elektrische Leitfähigkeit an der Oberfläche des Aluminiumpakets bestimmt wird,
- das Aluminiumpaket in Abhängigkeit der zuvor bestimmten elektrischen Leitfähigkeit sortiert wird.

Die Aluminiumlegierungsgruppen lassen sich hinsichtlich ihrer elektrischen Leitfähigkeit voneinander unterscheiden. So liegt beispielsweise die elektrische Leitfähigkeit einer 5xxx Legierung in einem ersten Referenzwertbereich, vorzugsweise < 40 % IACS (International Annealed Copper Standard), insbesondere < 35 % IACS, und die elektrische Leitfähigkeit der 6xxx Legierungsgruppe in einem zweiten Referenzwertbereich, vorzugsweise > 40 % IACS bzw. > 35 % IACS. Ohne auf diese Aluminiumgruppen beschränkt zu sein, unterscheiden sich deren Referenzwertbereiche dabei derart voneinander, dass sie eine Differenzierung zwischen beiden Legierungsgruppen erlauben. Anhand der erfindungsgemäßen Bestimmung der Leitfähigkeit an der Oberfläche des Aluminiumpaketes erhält man wenigstens einen Wert für die elektrische Leitfähigkeit, der einen Rückschluss auf die Zusammensetzung des Aluminiumpaketes insgesamt erlaubt. Die Bestimmung der elektrischen Leitfähigkeit umfasst erfindungsgemäß einerseits die unmittelbare Messung der elektrischen Leitfähigkeit an der Oberfläche des Aluminiumpaketes. Die auf diese Weise erhaltenen Messwerte können dann für die Zuordnung zu einer Aluminiumlegierungsgruppe direkt verwendet werden. Ferner umfasst die Bestimmung auch die Bildung von Mittelwerten und/oder gewichteten Werten, die aus den unmittelbar gemessenen Werten berechnet werden. Die Korrelation zwischen Oberflächenbeschaffenheit und dem Inneren des Aluminiumpaketes ist deshalb gegeben, weil seitens der Automobilindustrie vergleichsweise großflächige Blechreste verpresst werden, so dass im Außenbereich des Pressblocks erfassbare Blechabschnitte zu einem Blech gehören, dass sich auch im Inneren des Pressblocks befindet, an welcher Stelle eine Messung nicht ohne die aus dem Stand der Technik vorgenommene aufwendige Zerkleinerung vorgenommen werden kann. Es besteht insofern ein synergetischer Effekt der erfindungsgemäßen Oberflächenmessung und des erfindungsgemäß eingesetzten Aluminiumpaketes in der Hinsicht, dass einerseits plane Oberflächen für eine verbesserte Messgenauigkeit zur Verfügung stehen und andererseits die Messung an den verpressten flächigen Blechen an der Oberfläche des Aluminiumpakets einen Rückschluss auf die Gesamtzusammensetzung erlauben. Damit wird die Aluminiumsortierung in synergetischer Weise vereinfacht.

Anstelle der elektrischen Leitfähigkeit kann mit einem geeigneten Messverfahren auch eine andere Materialeigenschaft an der Oberfläche des Aluminiumpakets gemessen werden, die eine Sortierung der Aluminiumpakete ermöglicht. Bei der Materialeigenschaft handelt es demnach insbesondere um eine Materialeigenschaft, die Rückschlüsse auf die Legierungszusammensetzung oder auf die Aluminiumlegierungsgruppe erlaubt.

Entsprechend können als Materialeigenschaft insbesondere auch ein oder mehrere Legierungselement-Gehalte an der Oberfläche des Aluminiumpakets gemessen werden, vorzugsweise mittels eines spektroskopischen Verfahrens wie zum Beispiel LIBS (Laser Induced Breakdown Spectroscopy) oder Funkenerosionsspektroskopie. Beispielsweise kann der jeweilige Gehalt von einem oder mehrerer der folgenden Legierungselemente gemessen werden: Al, Mg, Mn, Fe, Si, Cu, Cr, Zn und Ti. Die gemessenen Gehalte einzelner oder mehrerer Legierungselemente ermöglichen dann die Zuordnung zu einer Aluminiumlegierungsgruppe (z.B. zur Aluminiumlegierungsgruppe 5xxx).

Die Verwendung von LIBS ermöglicht eine kontaktfreie Messung an dem Aluminiumpaket. Es ist daher nicht erforderlich, einen Messsensor unmittelbar am Aluminiumpaket zu positionieren, wodurch die Verarbeitung unterschiedlich großer Aluminiumpakete vereinfacht wird. Zur Messung an unterschiedlich großen Aluminiumpaketen weist eine verwendete LIBS-Oberflächenmesseinrichtung vorzugsweise ein Autofokussystem auf, um bei der LIBS-Messung auf die Oberfläche des Aluminiumpakets zu fokussieren.

Die auf diese Weise erhaltenen Messwerte können dann für die Zuordnung zu einer Aluminiumlegierungsgruppe direkt verwendet werden. Ferner umfasst die Bestimmung auch die Bildung von Mittelwerten und/oder gewichteten Werten, die aus den unmittelbar gemessenen Werten berechnet werden.

Es wird anmelderseitig davon ausgegangen, dass durch das erfindungsgemäße Verfahren wenigstens 50 % der Aluminiumpakete eindeutig einer Legierungsgruppe zugeordnet werden können. Lediglich die verbleibenden nicht eindeutig zuordenbaren Pressblöcke müssen zur weitergehenden Trennung einem aus dem Stand der Technik bekannten Verfahren zugeführt werden, bei dem die Aluminiumpakete aufgebrochen und zerkleinert werden. Das erfindungsgemäße Verfahren ist gegenüber den aus dem Stand der Technik bekannten Verfahren in besonderer Weise vorteilhaft, da es prozesstechnisch leicht zu realisieren und umzusetzen ist und eine hohe Sortiergenauigkeit bietet. Darüber hinaus ist das Verfahren vergleichsweise verschleißarm, da die Aluminiumpakete bestimmungsgemäß keiner mechanischen Beanspruchung ausgesetzt werden müssen.

Die erfindungsgemäßen Aluminiumpakete sind vorzugsweise in Form eines Quaders, insbesondere eines Kubus gepresst. Dies ermöglicht eine einfache und automatisierte Messung an vorgegebenen Stellen an der Oberfläche der Aluminiumpakete. Vorzugsweise handelt es sich bei den Aluminiumpaketen damit um Pressblöcke, die aus flächigen Aluminiumlegierungsschrotteilen bestehen. Dem Grunde nach ist das erfindungsgemäße Verfahren für Aluminiumpakete jeglicher Größe geeignet. Vorzugsweise weisen die quaderförmigen Pressblöcke jedoch Kantenlängen zwischen 30 cm und 120 cm, insbesondere zwischen 30 cm und 80 cm, auf. Im Sinne der Messgenauigkeit und der Prozessierbarkeit ist es bevorzugt, quaderförmige Pressblöcke mit Kantenlängen zwischen 30 cm und 120 cm, insbesondere zwischen 30 cm und 60 cm, im erfindungsgemäßen Verfahren einzusetzen. Die üblicherweise in einem solchem Aluminiumpaket verpressten flächigen Aluminiumlegierungsschrottteile weisen in der Regel im unverpressten Zustand eine rechteckige Kontur auf. Die Seitenlängen dieser unverpressten Aluminiumlegierungsschrottteile liegen in der Regel zwischen 50 cm und 2 m. Im Allgemeinen weisen quaderförmige Aluminiumpakete sechs vergleichsweise ebene Seiten auf, an denen eine Materialeigenschaft, insbesondere die elektrische Leitfähigkeit, mit vergleichsweise hoher Präzision gemessen werden kann. Dabei erstrecken sich die derart verpressten Bleche im Aluminiumpaket ausgehend von der Oberfläche des Aluminiumpaketes bis wenigstens ins Innere des Aluminiumpaketes hinein. Teilweise reichen die verpressten Bleche von einer Seite des Aluminiumpaketes zu einer anderen Seite des Aluminiumpaketes.

Es ist gemäß einer bevorzugten Ausgestaltung der Erfindung vorgesehen, dass die Materialeigenschaft, insbesondere die elektrische Leitfähigkeit oder ein oder mehrere Legierungselement-Gehalte, an wenigstens zwei verschiedenen Positionen auf der Oberfläche eines Aluminiumpaketes gemessen wird. Hierdurch wird der Tatsache Rechnung getragen, dass Aluminiumschrottteile verschiedener Zusammensetzung im Aluminiumpaket verpresst sein können. Durch Messung der Materialeigenschaft, insbesondere der elektrischen Leitfähigkeit oder ein oder mehrerer Legierungselement-Gehalte, an verschiedenen Positionen auf der Oberfläche des Aluminiumpaketes wird die Genauigkeit des erfindungsgemäßen Verfahrens in vorteilhafter Weise verbessert.

Zur weiteren Verbesserung der Genauigkeit des Verfahrens ist es gemäß einem bevorzugten Merkmal der Erfindung vorgesehen, dass die Materialeigenschaft, insbesondere die elektrische Leitfähigkeit oder ein oder mehrere Legierungselement-Gehalte, an wenigstens zwei verschiedenen Seiten des Aluminiumpaketes gemessen wird. Hierdurch wird sichergestellt, dass unterschiedliche Bereiche des Aluminiumpaketes vermessen werden. Zur weiteren Erhöhung der Messgenauigkeit ist es vorzugsweise vorgesehen, dass die Materialeigenschaft, insbesondere die elektrische Leitfähigkeit oder ein oder mehrere Legierungselement-Gehalte, an einer Mehrzahl von Seiten des Aluminiumpaketes gemessen wird. In diesem Fall ist es besonders bevorzugt, dass die Materialeigenschaft, insbesondere die Leitfähigkeit oder ein oder mehrere Legierungselement-Gehalte, auf wenigstens zwei sich gegenüberliegenden Seiten des Aluminiumpaketes und einer diesen beiden Seiten zwischengeordneten Seite gemessen wird. Hierdurch kann in vorteilhafter Weise eine hohe Präzision mit vergleichsweise geringem Messaufwand erreicht werden.

Gemäß einem weiteren bevorzugten Merkmal der Erfindung ist es vorgesehen, dass die Materialeigenschaft, insbesondere die elektrische Leitfähigkeit oder ein oder mehrere Legierungselement-Gehalte, an einer Mehrzahl von verschiedenen Positionen auf der Oberfläche des Aluminiumpaketes gemessen wird. Die Messpositionen sind dabei vorzugsweise gleichmäßig über diejenige Seite des Aluminiumpaketes verteilt, an der gemessen werden soll. In Abhängigkeit der zu vermessenden Seitenfläche des Aluminiumpaketes ist es bevorzugt, die Materialeigenschaft, insbesondere die elektrische Leitfähigkeit oder ein oder mehrere Legierungselement-Gehalte, an drei bis dreißig Messpositionen pro zu vermessender Seite des quaderförmigen Aluminiumpaketes zu messen. Bei Aluminiumpaketen mit üblichen Kantenlängen zwischen 30 cm und 120 cm, insbesondere zwischen 30 cm und 60 cm, wird die Materialeigenschaft, insbesondere die elektrische Leitfähigkeit oder ein oder mehrere Legierungselement-Gehalte, besonders bevorzugt an 5 bis 15 Messpositionen der zu vermessenden Seite des quaderförmigen Aluminiumpaketes gemessen.

Die Materialeigenschaft kann auch an deutlich mehr Messpositionen gemessen werden, um die Zuverlässigkeit des Verfahrens weiter zu erhöhen. Insbesondere können bei der Messung von Legierungselement-Gehalten mittels LIBS eine Vielzahl von Messungen, insbesondere mehr als 1000 Messungen pro Seite des Aluminiumpakets durchgeführt werden, die vorzugsweise über die entsprechende Seite des Aluminiumpakets verteilt sind. Die einzelnen Messungen können auch in Gruppen jeweils gemittelt werden. So ist es beispielsweise denkbar, dass bei 1000 Messungen an einer Seite eines Aluminiumpakets jeweils 10 Messungen gemittelt und die sich dadurch ergebenden 100 gemittelten Messwerte zur Zuordnung des Aluminiumpakets verwendet werden.

Indem mehrere Messungen, vorzugsweise an verschiedenen Seiten an der Oberfläche des Aluminiumpakets vorgenommen werden, erhöht sich die Wahrscheinlichkeit, dass die Ergebnisse der Messungen für die Gesamtzusammensetzung des Aluminiumpakets repräsentativ sind. Ergibt sich zum Beispiel aus mehreren Messungen an verschiedenen Seiten eines Aluminiumpakets, dass die vermessenen verpressten flächigen Aluminiumlegierungsschrottteile alle aus der Aluminiumlegierungsgruppe 5xxx stammen, so ist die Wahrscheinlichkeit sehr hoch, dass die Aluminiumlegierungsschrottteile des gesamten Aluminiumpakets zu einem sehr großen Anteil, wenn nicht sogar vollständig aus der Aluminiumlegierungsgruppe 5xxx stammen.

Vorzugsweise wird die Materialeigenschaft an wenigstens drei, weiter bevorzugt an wenigstens vier, besonders bevorzugt an wenigstens fünf und insbesondere an sechs Seiten des Aluminiumpakets gemessen. Es wurde festgestellt, dass bei einem Aluminiumpaket aus Aluminiumlegierungsschrottteilen einer ersten Aluminiumgruppe, das auch einen Beimischung von Aluminiumlegierungsschrottteilen einer zweiten Aluminiumgruppe enthält, mit hoher Wahrscheinlichkeit an zumindest einer Seite des Aluminiumpakets ein Aluminiumlegierungsschrottteil der zweiten Aluminiumgruppe aufweist, so dass eine solche Beimischung durch die Messung an mindestens fünf oder sogar allen sechs Seiten des Aluminiumpakets mit hoher Wahrscheinlichkeit festgestellt werden und das entsprechende Aluminiumpaket insbesondere der Mischgruppe zugeordnet werden kann. Auf diese Weise kann die Zuverlässigkeit des Sortierungsverfahrens verbessert werden.

Gemäß einer besonders bevorzugten Ausgestaltung der Erfindung wird die Materialeigenschaft, insbesondere die elektrische Leitfähigkeit oder ein oder mehrere Legierungselement-Gehalte, an verschiedenen Seiten und/oder Positionen im Wesentlichen zeitgleich gemessen Dabei berücksichtigt der Ausdruck "im Wesentlichen" Abweichungen im Rahmen der Signalgenauigkeit. Hierdurch kann die Zeit, die für eine vollständige Vermessung des Pressblocks benötigt wird, in vorteilhafter Weise verringert werden. Insbesondere kann dadurch die Anzahl der Aluminiumpakete, die in einem bestimmten Zeitintervall vermessen werden können, erhöht werden. Dies verbessert entscheidend die Wirtschaftlichkeit des Verfahrens.

Gemäß einer alternativen Ausgestaltung der Erfindung wird die Materialeigenschaft, insbesondere die elektrische Leitfähigkeit oder ein oder mehrere Legierungselement-Gehalte, an verschiedenen Seiten und/oder Positionen zeitversetzt gemessen. Insbesondere wird hierbei eine Messsequenz vorgegeben, durch die die zeitliche Reihenfolge der Messungen festlegt wird. Hierdurch kann insbesondere vorrichtungsseitig die Anzahl der benötigten Messmittel reduziert werden.

Gemäß einem bevorzugten Merkmal der Erfindung wird der Pressblock in Abhängigkeit der gemessenen Werte der Materialeigenschaft, insbesondere der elektrischen Leitfähigkeit oder ein oder mehrerer Legierungselement-Gehalte, einer Aluminiumlegierungsgruppe oder einer Mischgruppe aus wenigstens zwei Aluminiumlegierungsgruppen zugeordnet. Die Zuordnung der einzelnen Aluminiumpakete zu den vorbezeichneten Gruppen erfolgt vorzugsweise mittels rechnergestützter Auswertung der gemessenen Werte für die Materialeigenschaft, insbesondere für die elektrische Leitfähigkeit oder für die ein oder mehreren Legierungselement-Gehalte. Dabei kann eine entsprechende Zuordnung insbesondere dadurch erreicht werden, dass die gemessenen Werte für die Materialeigenschaft, insbesondere die elektrische Leitfähigkeit oder die ein oder mehreren Legierungselement-Gehalte, mit den Referenzwertbereichen für die einzelnen Aluminiumlegierungsgruppen verglichen werden. Dies kann für jeden einzelnen gemessenen Wert erfolgen. Alternativ kann ein aus den gemessenen Werten berechneter Mittelwert verwendet werden. Vorzugsweise handelt es sich dabei um die einzelnen Messwerte. Dies bewirkt in vorteilhafter Weise eine weitere Verbesserung der Sortiergenauigkeit. Sofern in diesem Fall die gemessenen Werte mit nur einem Referenzwertbereich einer Aluminiumlegierungsgruppe übereinstimmen, wird das Aluminiumpaket zum Zwecke der Sortierung dieser Aluminiumlegierungsgruppe zugeordnet. Es ist dabei nicht erforderlich, dass alle gemessenen Werte innerhalb des Referenzwertbereichs liegen. Werte, die außerhalb aller Referenzwertbereiche für Aluminiumlegierungen liegen, werden in den Zuordnungsprozess nicht miteinbezogen, sondern als Messfehler deklariert und ignoriert. Dies ist für das erfindungsgemäße Verfahren unschädlich, da das vermesse Aluminiumpaket im Wesentlichen Aluminiumlegierungen aufweist. Sofern jedoch wenigstens einer der Werte mit einem abgrenzbaren Referenzwertbereich einer ersten Aluminiumlegierungsgruppe und wenigstens einer der übrigen gemessenen Werte mit einem Referenzwertbereich einer zweiten Aluminiumlegierungsgruppe übereinstimmt, wird das Aluminiumpaket der Mischgruppe aus beiden Aluminiumlegierungsgruppen zugeordnet.

Bei einer weiteren Ausführungsform kann das vermessene Aluminiumpaket auch bereits dann einer Aluminiumlegierungsgruppe zugewiesen werden, wenn ein überwiegender Anteil, insbesondere mindestens 80% oder mindestens 90% der nicht als Messfehler deklarierten Messungen, im Referenzwertbereich für diese Aluminiumlegierungsgruppe liegt, auch wenn maximal 20% oder maximal 10% der Messungen im Referenzwertbereich einer anderen Aluminiumlegierungsgruppe liegen. Auf diese Weise kann der Anteil der einer Aluminiumlegierungsgruppe (und nicht der Mischgruppe) zugeordneten Aluminiumpakete erhöht werden. Zwar wird hierbei eine gewisse Verunreinigung der Aluminiumpakete mit Aluminiumschrottteilen aus einer anderen Aluminiumlegierungsgruppe in Kauf genommen. Dies kann jedoch für manche Anwendungen akzeptabel sein, wenn die Anforderungen an die Sortierung nicht besonders hoch sind.

Sollten die Messwerte nicht ohne weiteres abgrenzbaren Referenzwertbereichen für verschiedene Aluminiumlegierungen zugeordnet werden können, weil sich insbesondere Referenzwertbereiche mancher Aluminiumlegierungen überlappen, bedarf es einer zusätzlichen Maßnahme. Dabei macht man sich den Umstand zu Nutze, dass die potenzielle Zusammensetzung des Aluminiumpaketes vor der Sortierung in der Regel bereits auf eine bestimmte Auswahl an Aluminiumlegierungen eingrenzbar ist. So zum Beispiel bei Aluminiumpaketen, die aus der Automobilindustrie stammen. Dort werden zum weitaus größten Teil Aluminiumlegierungen der Gruppe 5xxx und/oder 6xxx verwendet. In diesem Fall wäre es unerheblich, ob der Referenzwertbereich der Gruppe 5xxx mit dem Referenzwertbereich der Gruppe 2xxx überlappen würde, da es von vornherein ausgeschlossen ist, dass eine Aluminiumlegierung dieser Gruppe im Aluminiumpaket vorhanden ist. Es sind daher nur die voneinander abgrenzbaren Referenzwertbereiche der Gruppen 5xxx und 6xxx miteinander zu vergleichen und es kann eine zweifelsfreie Zuordnung zur Gruppe 5xxx erfolgen.

Entsprechend wird bei einer Ausführungsform des Verfahrens das Aluminiumpaket aus einer Menge von Aluminiumpaketen bereitgestellt, in denen jeweils flächige Aluminiumlegierungsschrottteile verpresst sind, wobei die in der Menge von Aluminiumpaketen verpressten Aluminiumlegierungsschrottteile zu einem überwiegenden Anteil, vorzugsweise zu mindestens 70 Gew.-%, insbesondere mindestens 80 Gew.-%, aus Legierungszusammensetzungen aus einer Anzahl vorbekannter Aluminiumlegierungsgruppen bestehen. Beispielsweise kann das Aluminiumpaket aus einer Menge von Aluminiumpaketen bereitgestellt werden, in denen mindestens 70 Gew.-%, insbesondere mindestens 80 Gew.-%, der darin verpressten Aluminiumlegierungsschrottteile aus einer der beiden Aluminiumlegierungsgruppen 5.xxx oder 6.xxx stammen. Zur Sortierung der Aluminiumpakete kann dann eine Materialeigenschaft verwendet werden, die die Unterscheidung von 5xxx- und 6xxx-Aluminiumlegierungsschrott ermöglicht.

Aluminiumlegierungen der Gruppe 5.xxx weisen neben Aluminium als Hauptkomponente zusätzlich Magnesium mit einem Massenanteil von 0,2 bis 6,2 % auf. Demgegenüber weisen Aluminiumlegierungen der Gruppe 6.xxx neben Aluminium als Hauptkomponente zusätzlich Magnesium und Silicium auf. Die beiden zusätzlichen Komponenten liegen dabei in der Regel mit Massenanteilen von bis zu 1 % in der Legierung vor.

Entsprechend können zur Unterscheidung von 5xxx- und 6xxx-Aluminiumlegierungsschrott beispielsweise verschiedene Legierungselement-Gehalte als Materialeigenschaft gemessen werden, insbesondere die Legierungselement-Gehalte von Si und ggf. Mg.

Alternativ kann zur Unterscheidung von 5xxx- und 6xxx-Aluminiumlegierungsschrott auch die elektrische Leitfähigkeit gemessen werden, wobei eine Leitfähigkeit < 35 % IACS der 5xxx-Aluminiumlegierungsgruppe und eine Leitfähigkeit von > 35 % IACS der 6xxx-Aluminiumlegierungsgruppe entspricht.

Ist nicht bekannt, aus welchen Aluminiumlegierungsgruppen die Aluminiumlegierungsschrottteile einer Menge von Aluminiumpaketen vorwiegend stammen, so können die Aluminiumlegierungsgruppen beispielsweise durch stichprobenartige Untersuchung einzelner Aluminiumpakete bestimmt werden.

Gemäß einer besonders bevorzugten Ausgestaltung der Erfindung wird das Aluminiumpaket nach der Zuordnung entsprechend seiner Zuordnung sortiert. Die Aluminiumpakete, die in die Aluminiumlegierungsgruppen 5xxx oder 6xxx einsortiert wurden, können dabei unmittelbar als Rohstoff verwendet werden. Die Aluminiumpakete, die der Mischgruppe zugeordnet und entsprechend einsortiert wurden, können wahlweise einem aus dem Stand der Technik bekannten Partikeltrennverfahren zugeführt werden. Auf diese Weise kann die Anzahl der weiter zu zerkleinernden Aluminiumpakete stark reduziert werden, da von der ursprünglichen Menge an Aluminiumpaketen nur die der Mischgruppe zugeordneten Aluminiumpakete weiter zerkleinert werden.

Das erfindungsgemäße Verfahren ist dabei nicht auf die grobe Einteilung in Aluminiumlegierungshauptgruppen beschränkt. Auch Legierungssubgruppen der jeweiligen Hauptgruppe sind aufgrund verschiedener elektrischer Leitfähigkeiten voneinander unterscheidbar. Es kann daher bereits im Rahmen der Leitfähigkeitsmessung eine Zuordnung der Aluminiumpakete zu verschiedenen Subgruppen mit unterscheidbaren Referenzwertbereichen erfolgen.

Es ist ferner bevorzugt möglich, einzelne Legierungen anhand ihrer Referenzwerte voneinander zu unterscheiden. Dabei ist es möglich, das Material der Aluminiumpakete anhand der gemessenen Materialeigenschaft, insbesondere der elektrischen Leitfähigkeit oder der ein oder mehreren Legierungselement-Gehalte, einzelnen Aluminiumlegierungen der jeweiligen Gruppe spezifisch zuzuordnen. Dies erlaubt im Ergebnis eine Sortierung der Aluminiumpakete nach Untergruppen und/oder Einzellegierungen.

Gemäß einem bevorzugten Merkmal der Erfindung wird das Aluminiumpaket in einem zusätzlichen Verfahrensschritt auf magnetisierbare bzw. magnetische Bestandteile hin überprüft. Es kann nicht ausgeschlossen werden, dass es in den Automobilwerken vereinzelt zu Fehlpressungen kommt, wodurch magnetisierbare bzw. magnetische Bestandteile wie Eisen oder magnetisierbare bzw. magnetische Bleche im Aluminiumpaket enthalten sein können. Insbesondere Eisen ist dabei für die Weiterverarbeitung von Aluminium aus Aluminiumschrotten besonders schädlich. Durch die zusätzliche Überprüfung wird sichergestellt, dass die Aluminiumpakete keine magnetisierbaren bzw. magnetischen Bestandteile, insbesondere kein Eisen aufweisen. Ergibt sich bei der Überprüfung, dass ein magnetisierbaren bzw. magnetischer Bestandteil in dem Aluminiumpaket enthalten ist, wird dieser ausgeschleust. Es ist vorzugsweise vorgesehen, dass die Überprüfung vor der Messung der Materialeigenschaft, insbesondere der elektrischen Leitfähigkeit oder ein oder mehrerer Legierungselement-Gehalte, des Aluminiumpaketes durchgeführt wird. Hierdurch werden Fehlmessungen mit Bezug auf die Materialeigenschaft, insbesondere die elektrische Leitfähigkeit oder ein oder mehrere Legierungselement-Gehalte, in vorteilhafter Weise verhindert. Zum Zwecke der Überprüfung ist es vorzugsweise vorgesehen, das Aluminiumpaket mit einem vergleichsweise starken Magneten zu prüfen. Zu diesem Zweck wird das Aluminiumpakt in den Bereich des Magnetfeldes des Magneten eingebracht Ferner ist es bevorzugt, die Aluminiumblöcke mit magnetisierbaren bzw. magnetischen Bestandteilen vor der Messung der Materialeigenschaft, insbesondere der elektrischen Leitfähigkeit oder ein oder mehrerer Legierungselement-Gehalte, auszusortieren, vorzugsweise auszuschleusen.

Eine Überprüfung, ob das Aluminiumpaket Bestandteile mit hohem Eisengehalt, insbesondere Eisen bzw. Eisenlegierungen wie zum Beispiel Stahl enthält, kann auch mittels LIBS erfolgen, wodurch sich ein hoher Fe-Gehalt an einer Messposition an der Oberfläche des Aluminiumpakets bestimmen lässt. Wenn als Materialeigenschaft Legierungselement-Gehalte mittels LIBS bestimmt werden, lassen sich die erhaltenen Messergebnisse auch für eine Überprüfung auf Fe-reiche Bestandteile nutzen, so dass ein gesonderter Verfahrensschritt zur Detektion Fe-reicher Bestandteile entbehrlich und das gesamte Verfahren vereinfacht wird.

Bei einer weiteren Ausführungsform wird an der Oberfläche des Aluminiumpakets ein für die Messung der Materialeigenschaft geeigneter Bereich lokalisiert und die Materialeigenschaft wird in dem lokalisierten Bereich an der Oberfläche des Aluminiumpakets gemessen. Wird die Materialeigenschaft an mehreren Seiten bzw. Positionen des Aluminiumpakets gemessen, so werden vorzugsweise entsprechend mehrere für die Messung geeignete Bereiche an verschiedenen Seiten bzw. Positionen lokalisiert. Auf diese Weise kann die Zuverlässigkeit der Messungen verbessert werden, so dass es zu weniger Fehlmessungen kommt. Zur Lokalisierung des Bereichs wird vorzugsweise die Topografie einer Seite des Aluminiumpakets oder eines Teils davon bestimmt, beispielsweise mittels eines Laserscanners. Unter der Topografie wird das Höhenprofil der Oberfläche der jeweiligen Seite oder eines Teils davon verstanden.

Bei dem für die Messung der Materialeigenschaft geeigneten Bereich kann es sich insbesondere um einen im Wesentlichen ebenen Bereich eines Aluminiumlegierungsschrottteils handeln. Durch die Lokalisierung eines vorzugsweise im Wesentlichen ebenen Bereichs eines Aluminiumlegierungsschrottteils kann die Zuverlässigkeit der Messung verbessert werden. Beispielsweise liefern Messsonden zur Bestimmung der elektrischen Leitfähigkeit zuverlässigere Werte, wenn die Messung an einem recht ebenen Bereich eines Aluminiumlegierungsschrottteils erfolgt. Ein solcher im Wesentlichen ebene Bereich ist vorzugsweise makroskopisch plan, so dass insbesondere eine Messsonde, zum Beispiel für die Messung der elektrischen Leitfähigkeit, in dem ebenen Bereich positioniert oder aufgesetzt werden kann. Zudem wird eine Positionierung der Messung zwischen zwei Schrottteilen verhindert, die die Messung verfälschen könnte. Die Lokalisierung des ebenen Bereichs kann beispielsweise dadurch erfolgen, dass mittels einer Kamera ein Bild des Aluminiumpakets aufgenommen und durch bildverarbeitungstechnische Methoden ein für die Messung geeigneter, insbesondere im Wesentlichen ebener Bereich eines Aluminiumlegierungsschrottteils an der Oberfläche des Aluminiumpakets lokalisiert wird. Alternativ kann die Oberfläche des Aluminiumpakets beispielsweise auch mit einem Laser abscannt werden, um einen geeigneten, insbesondere im Wesentlichen ebenen Bereich eines Aluminiumlegierungsschrottteils zu lokalisieren.

Der lokalisierte Bereich weist vorzugsweise einen Durchmesser von mindestens 10 mm, insbesondere mindestens 15 mm auf. Auf diese Weise kann die Messung zuverlässig positioniert und durchgeführt werden.

Wird die Materialeigenschaft mittels eines mit dem Aluminiumpaket zu kontaktierenden oder sehr nah an der Oberfläche des Aluminiumpakets zu positionierenden Messsensor gemessen, beispielsweise mit einem Messsensor zur Messung der elektrischen Leitfähigkeit, so ist der lokalisierte Bereich vorzugsweise an die Größe des Messsensors angepasst.

Die Messung der Materialeigenschaft mittels LIBS hat den Vorteil, dass LIBS-Messungen auch in weniger ebenen Bereichen gute Messergebnisse liefern, so dass auf die Lokalisierung eines ebenen Bereichs bedarfsweise verzichtet werden kann, um das Verfahren zu vereinfachen. Zur Erzielung besonders hoher Messgenauigkeit kann jedoch vorzugsweise auch für LIBS ein ebener Bereich bestimmt werden.

Vorrichtungsseitig schlägt die Erfindung zur Lösung der Aufgabe eine Sortieranlage für die Sortierung von Aluminiumpaketen aus flächigen Aluminiumlegierungsschrottteilen aus im Wesentlichen Aluminiumlegierungen vor, mit
- einer Oberflächenmesseinrichtung zur Messung einer Materialeigenschaft an der Oberfläche der Aluminiumpakete,
- einer Sortiereinrichtung zur zuordnungsabhängigen Ausschleusung der Aluminiumpakete.

Insbesondere schlägt die Erfindung eine Sortieranlage für die Sortierung von Aluminiumpaketen aus flächigen Aluminiumlegierungsschrottteilen aus im Wesentlichen Aluminiumlegierungen vor, mit
- einer Oberflächenmesseinrichtung zur Messung der elektrischen Leitfähigkeit oder zur Messung ein oder mehrerer Legierungselement-Gehalte, an der Oberfläche der Aluminiumpakete,
- einer Sortiereinrichtung zur zuordnungsabhängigen Ausschleusung der Aluminiumpakete.

Die zuvor und nachfolgend beschriebenen verschiedenen Ausführungsformen, Merkmale und Ausgestaltungen des Sortierungsverfahrens und der Sortieranlage gelten jeweils sowohl für das Sortierungsverfahren als auch für die Sortieranlage. Zudem können die einzelnen Ausführungsformen, Merkmale und Ausgestaltungen auch miteinander kombiniert werden.

Gemäß einer bevorzugten Ausgestaltung der Erfindung stellt die Oberflächenmesseinrichtung einen wenigstens zweiseitig geschlossenen Volumenraum zur Aufnahme von quaderförmigen Aluminiumpaketen zur Verfügung. Der Volumenraum wird dabei von wenigstens zwei Seitenwänden begrenzt. Die Seitenwände sind dazu ausgebildet, wenigstens ein Messmittel, vorzugsweise in Form eines elektronischen Sensors, aufzunehmen. Vorzugsweise sind die Seitenwände dazu ausgebildet, eine Mehrzahl von Sensoren zur Messung der Materialeigenschaft, insbesondere der elektrischen Leitfähigkeit oder ein oder mehrerer Legierungselement-Gehalte, aufzunehmen. Zur Messung von ein oder mehreren Legierungselement-Gehalten kann die Oberflächenmesseinrichtung insbesondere zur Durchführung einer LIBS-Messung oder einer Funkenerosionsspektroskopie-Messung eingerichtet sein.

Gemäß einer bevorzugten Ausgestaltung der Erfindung sind die Sensoren relativ gegenüber der jeweiligen Seitenwand verfahrbar gelagert. Besonders bevorzugt dient hierzu eine Verfahreinrichtung, die von einer der Seitenwände aufgenommen ist. Als Verfahreinrichtung ist es insbesondere bevorzugt, einen Hydraulik- oder Pressluftstempel zu verwenden. Der Hydraulik- oder Pressluftstempel trägt dabei Aluminiumpaketseitig einen Sensor. Hierdurch kann - insbesondere zur Messung der elektrischen Leitfähigkeit - die zu messende Oberfläche des Aluminiumpaketes mit dem Sensor unmittelbar kontaktiert werden. Dabei werden etwaige Oberflächenunebenheiten und/oder abweichende Außenmaße des Aluminiumpaketes kompensiert. In vorteilhafter Weise kann hierdurch die Messgenauigkeit der Oberflächenmesseinrichtung verbessert werden.

Gemäß einem bevorzugten Merkmal der Erfindung verfügt die Sortieranlage über eine elektronische Datenverarbeitungseinrichtung. Diese dient der automatisierten Auswertung der Messergebnisse der Materialeigenschaft, insbesondere der elektrischen Leitfähigkeit oder der ein oder mehreren Legierungselement-Gehalte, und der automatisierten Zuordnung der Aluminiumpakete zu einer Aluminiumlegierungsgruppe. Die Datenverarbeitungseinrichtung steht dabei in datentechnischer Kommunikation mit der Oberflächenmesseinrichtung. Die von der Oberflächenmesseinrichtung gemessenen Werte werden über diese Datenverbindung an die Datenverarbeitungseinrichtung übermittelt. Gemäß einem bevorzugten Merkmal der Erfindung ist die Datenverarbeitungseinrichtung steuerungstechnisch mit der Sortiereinrichtung verbunden. Zu diesem Zweck verfügt die Datenverarbeitungseinrichtung vorzugsweise über eine Steuerungseinheit. Mittels der Steuerungseinheit wird die Sortiereinrichtung dahingehend gesteuert, dass sie die vermessenen Aluminiumpakete entsprechend ihrer Zuordnung zu einer Aluminiumlegierungsgruppe ausschleust.

Erfindungsgemäß können Oberflächenmesseinrichtung, die elektronische Datenverarbeitungseinrichtung und die Sortiereinrichtung als separate Baugruppen ausgeführt sein. Dies hat den Vorteil einer vergleichsweise einfachen Verfahrensführung, die wenig fehleranfällig ist.

Alternativ dazu können insbesondere die Oberflächenmesseinrichtung und die Sortiereinrichtung als integrierte Baugruppe ausgebildet sein. Dies kann zum Beispiel durch einen kombinierten Greifroboter realisiert sein, der über Sensoren in seinem Greifwerkzeug verfügt. Dieser Aufbau erlaubt eine vergleichsweise schnelle Sortierung, so dass die Durchsatzrate der verarbeiteten Aluminiumpakete erhöht werden kann. Es ist in diesem Zusammenhang besonders bevorzugt, auch die Datenverarbeitungseinrichtung mit der Oberflächenmesseinrichtung und der Sortiereinrichtung integriert auszubilden. Hierdurch werden weitere Synergieeffekte erzielt, die zu einer Erhöhung der Durchsatzrate der Aluminiumpakete führt.

Gemäß einem bevorzugten Merkmal der Erfindung stellt die Sortieranlage eine magnetische Prüfeinrichtung bereit. Diese verfügt über wenigstens einen Magneten, vorzugsweise einen Elektromagneten. Vorzugsweise ist die Prüfeinrichtung als Greifroboter ausgebildet. Hierdurch kann ein magnetisches Aluminiumpaket unmittelbar ausgeschleust werden. Vorzugsweise sind Oberflächenmesseinrichtung, Sortiereinrichtung und die magnetische Prüfeinrichtung dabei als integrierte Baugruppe ausgebildet. Insbesondere sind alle Komponenten als einziger kombinierter Greifroboter ausgebildet.

Bei einer weiteren Ausführungsform umfasst die Sortieranlage eine Lokalisiereinrichtung, die zur Lokalisierung eines für die Messung der Materialeigenschaft geeigneten, vorzugsweise im Wesentlichen ebenen Bereichs eines Aluminiumlegierungsschrotteils an der Oberfläche eines Aluminiumpakets eingerichtet ist. Auf diese Weise kann die Sortieranlage eine zur Durchführung der Messung geeigneten Bereich auf einem Aluminiumpaket lokalisieren, so dass die Zuverlässigkeit der Messung erhöht wird. Die Lokalisiereinrichtung kann insbesondere eine Kamera und Bildverarbeitungsmittel oder einen Laserscanner und Datenverarbeitungsmittel zur Auswertung der vom Laserscanner erfassten Daten umfassen. Die Oberflächenmesseinrichtung ist insbesondere derart eingerichtet, dass die Messung der Materialeigenschaft in dem mit der Lokalisiereinrichtung lokalisierten Bereich erfolgt.

Die Lokalisiereinrichtung kann insbesondere eine Topografiemesseinrichtung aufweisen, die dazu eingerichtet ist, die Topografie einer Seite des Aluminiumpakets oder eines Teils davon zu bestimmen, beispielsweise mittels eines Laserscanners.

Das Sortierungsverfahren erfolgt vorzugsweise im Wesentlichen automatisiert. Insbesondere wird vorzugsweise die Materialeigenschaft an der Oberfläche des Aluminiumpakets automatisch gemessen, vorzugsweise an einer zuvor automatisch lokalisierten Position auf der Oberfläche des Aluminiumpakets. Weiterhin wird das Aluminiumpaket vorzugsweise automatisiert in Abhängigkeit von der zuvor bestimmten Materialeigenschaft sortiert. Zu diesem Zweck kann das Sortierungsverfahren insbesondere unter Verwendung der zuvor beschrieben Sortieranlage durchgeführt werden.

Die Sortieranlage ist entsprechend vorzugsweise zur automatisierten Sortierung von Aluminiumpaketen eingerichtet. Insbesondere weist die Sortieranlage vorzugsweise eine elektronische Datenverarbeitungseinrichtung auf, die dazu eingerichtet ist, die Messung einer Materialeigenschaft an der Oberfläche eines Aluminiumpakets durch die Oberflächenmesseinrichtung zu veranlassen, vorzugsweise in einem zuvor von einer Lokalisiereinrichtung lokalisierten Bereich, die Messergebnisse der Messung auszuwerten, um die Aluminiumpakete einer Aluminiumlegierungsgruppe bzw. Mischgruppe zuzuordnen und die Sortierung der Aluminiumpakete abhängig von der jeweiligen Zuordnung durch die Sortiereinrichtung zu veranlassen. Die Datenverarbeitungseinrichtung kann insbesondere einen Speicher mit Befehlen aufweisen, deren Ausführung auf mindestens einem Mikroprozessor der Datenverarbeitungseinrichtung die Durchführung des Sortierungsverfahrens bewirkt.

Auf diese Weise lassen sich Aluminumpakete automatisch effektiv sortieren.

Im Folgenden werden weitere Ausführungsformen 1 bis 7 des Sortierungsverfahrens und Ausführungsformen 8 bis 11 der Sortieranlage beschrieben:
1. Sortierungsverfahren für Aluminiumpakete, bei dem
   - ein Aluminiumpaket bereitgestellt wird, in dem flächige Aluminiumlegierungsschrottteile verpresst sind,
   - die elektrische Leitfähigkeit an der Oberfläche des Aluminiumpaketes gemessen wird,
   - das Aluminiumpaket in Abhängigkeit der zuvor bestimmten elektrischen Leitfähigkeit sortiert wird.
2. Verfahren gemäß Ausführungsform 1, dadurch gekennzeichnet, dass die elektrische Leitfähigkeit an wenigstens zwei verschiedenen Seiten des Aluminiumpaketes gemessen wird.
3. Verfahren gemäß einer der Ausführungsformen 1 oder 2, dadurch gekennzeichnet, dass die elektrische Leitfähigkeit an einer Mehrzahl von verschiedenen Positionen an der Oberfläche des Aluminiumpaketes gemessen wird.
4. Verfahren gemäß einer der Ausführungsformen 1 bis 3, dadurch gekennzeichnet, dass die elektrische Leitfähigkeit an verschiedenen Positionen zeitgleich gemessen wird.
5. Verfahren gemäß einer der Ausführungsformen 1 bis 4, dadurch gekennzeichnet, dass die gemessenen Werte für die elektrische Leitfähigkeit mit Referenzwertbereichen verglichen werden, die für verschiedene Aluminiumlegierungsgruppe spezifisch sind, wobei das Aluminiumpaket bei Übereinstimmung der gemessenen Werte mit nur einem Referenzwertbereich derjenigen Aluminiumlegierungsgruppe zugeordnet wird, für die der Referenzwertbereich spezifisch ist.
6. Verfahren gemäß Ausführungsform 5, dadurch gekennzeichnet, dass das Aluminiumpaket einer Mischgruppe zugeordnet wird, wenn wenigstens einer der gemessenen Werte mit einem Referenzwertbereich für eine erste Aluminiumlegierungsgruppe und wenigstens einer der übrigen gemessenen Werte mit einem Referenzwertbereich für eine zweite Aluminiumlegierungsgruppe übereinstimmt.
7. Verfahren gemäß einer der Ausführungsformen 1 bis 6, gekennzeichnet durch einen zusätzlichen Verfahrensschritt, bei dem das Aluminiumpaket vorzugsweise vor der Messung der elektrischen Leitfähigkeit auf magnetische Bestandteile hin überprüft wird.
8. Sortieranlage für die Sortierung von Aluminiumpaketen in denen flächige Aluminiumlegierungsschrottteile verpresst sind, mit
   - einer Oberflächenmesseinrichtung zur Messung der elektrischen Leitfähigkeit an der Oberfläche der Aluminiumpakete,
   - einer Sortiereinrichtung zur Ausschleusung der Aluminiumpakete.
9. Sortieranlage gemäß Ausführungsform 8, dadurch gekennzeichnet, dass die Oberflächenmesseinrichtung wenigstens ein Messmittel zur Messung der elektrischen Leitfähigkeit an verschiedenen Positionen der Oberfläche eines Aluminiumpaketes aufweist.
10. Sortieranlage gemäß einer der Ausführungsformen 8 oder 9, gekennzeichnet durch eine elektronische Datenverarbeitungseinrichtung zur automatisierten Auswertung der Messergebnisse der elektrischen Leitfähigkeit und der automatisierten Zuordnung der Aluminiumpakete zu einer Aluminiumlegierungsgruppe.
11. Sortieranlage gemäß einer der Ausführungsformen 8 bis 10, dadurch gekennzeichnet, dass die Oberflächenmesseinrichtung und die Sortiereinrichtung als integrierte Baugruppe ausgebildet sind.

Weitere Vorteile und Merkmale des Sortierungsverfahrens und der Sortieranlage können der nachfolgenden Beschreibung von Ausführungsbeispielen entnommen werden, wobei auf die beigefügte Zeichnung Bezug genommen wird. Dabei zeigen
- Fig. 1: einen Querschnitt durch ein Aluminiumpaket zum Einsatz im erfindungsgemäßen Verfahren;
- Fig. 2: die erfindungsgemäße Auswertung von Messwerten des Aluminiumpaketes und die erfindungsgemäße Zuordnung des Aluminiumpaketes zu einer Aluminiumlegierungsgruppe oder einer Mischgruppe in Form eines Prozessdiagramms;
- Fig. 3: eine schematische Darstellung des erfindungsgemäßen Verfahrens und der Sortieranlage in Form eines Flussdiagramms;
- Fig. 4: ein weiteres Ausführungsbeispiel der Sortieranlage für die Sortierung von Aluminiumpaketen;
- Fig. 5: einen schematischen Detailausschnitt der Sortieranlage aus Fig. 4;
- Fig. 6: ein Aluminiumpaket mit mehreren Messbereichen bzw. Messpositionen in schematischer Darstellung,
- Fig. 7: ein Aluminiumpaket mit alternativen Messbereichen bzw. Messpositionen in schematischer Darstellung; und
- Fig. 8: ein Aluminiumpaket mit weiteren alternativen Messbereichen bzw. Messpositionen in schematischer Darstellung.

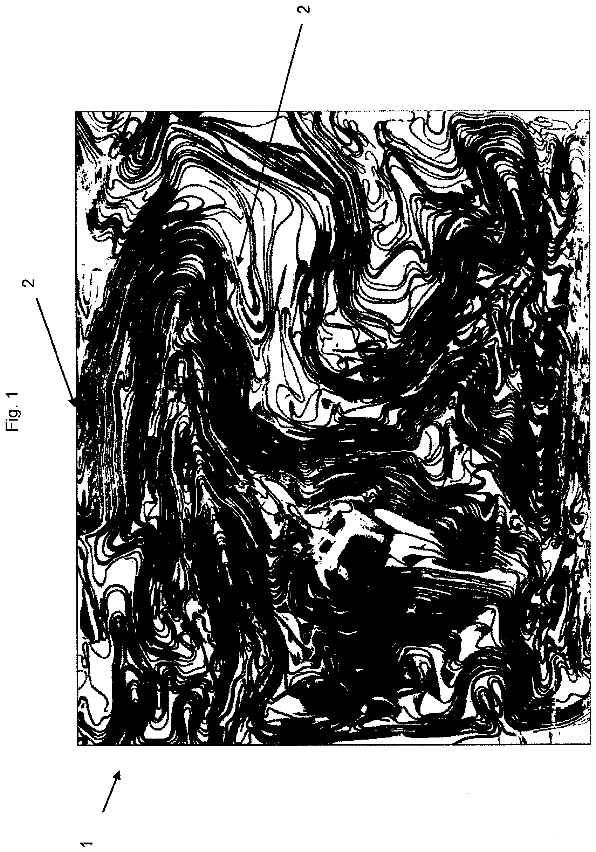

Fig. 1 zeigt ein im erfindungsgemäßen Verfahren verwendetes Aluminiumpaket 1 aus Aluminiumlegierungsblechen 2 aus im Wesentlichen Aluminiumlegierungen der Gruppe 5xxx und/oder 6xxx. Figur 1 bildet dabei die realistischen Verhältnisse im Inneren eines quaderförmigen Aluminiumpaketes ab. Es ist zu erkennen, dass sich das Blechbündel 2 in seinem zusammengepressten Zustand von der Oberfläche des Aluminiumpaketes in Richtung der Mitte und auf die gegenüberliegende Seite des Aluminiumpaketes erstreckt. Diese besondere Ausgestaltung des Aluminiumpaketes 1 macht sich das erfindungsgemäße Verfahren in bislang unbekannter Weise zu Nutze, indem Messungen an der Oberfläche des Aluminiumpaketes 1 detaillierte Rückschlüsse auf die Gesamtzusammensetzung des Aluminiumpaketes 1 erlauben.

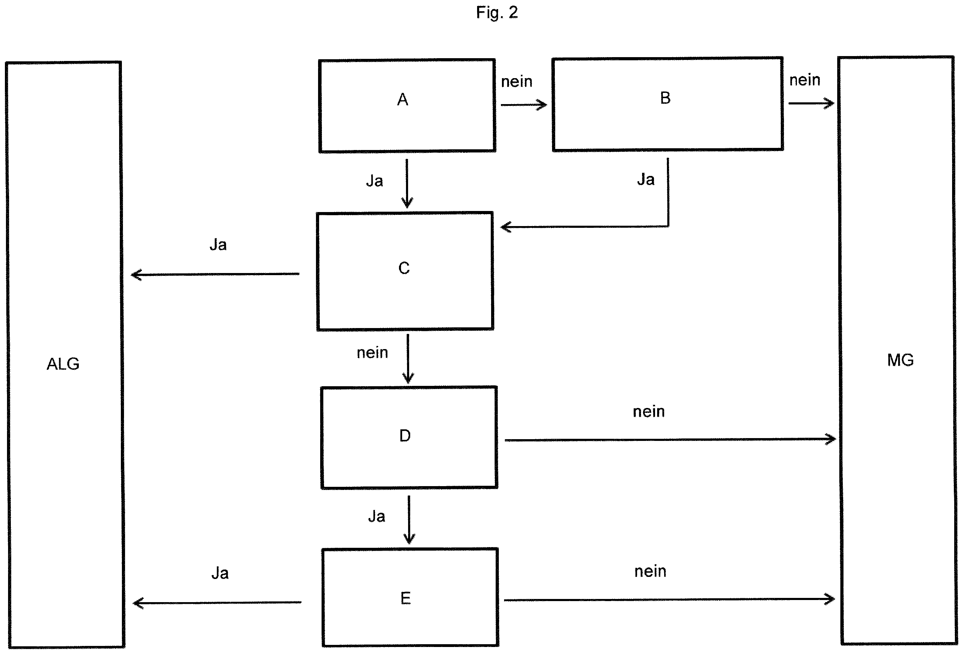

Figur 2 zeigt ein Prozessdiagramm zur Abbildung des erfindungsgemäßen Auswertungs-und Zuordnungsprozesses. Dabei geht das Diagramm von der Annahme aus, dass die elektrische Leitfähigkeit an der Oberfläche des Aluminiumpaketes 1 gemessen wurde und von wenigstens drei Seiten des Aluminiumpaketes 1 je 10 Messwerte vorliegen. Darüber hinaus ist es vorzugsweise vorgesehen, dass der gesamte Prozess vollautomatisiert, bevorzugt computergestützt durchgeführt wird.

Beginnend mit Schritt A wird nun überprüft, ob alle Messwerte vollständig innerhalb eines Referenzwertbereichs einer Aluminiumlegierungsgruppe liegen.

Wenn dem so ist, geht es weiter mit Schritt C. Wenn dem nicht so ist, wird bei Schritt B zunächst überprüft, ob die Messwerte zu einem Teil in dem Referenzwertbereich der Aluminiumlegierungsgruppe und zum anderen Teil vollkommen außerhalb jeglicher Referenzwertbereiche von Aluminiumlegierungen liegen. Wenn dies bestätigt wird, werden die Messwerte, die nicht in dem Referenzwertbereich der Aluminiumlegierung liegen, als Messfehler deklariert und für den weiteren Prozess ignoriert. In diesem Fall geht es ebenfalls weiter mit Schritt C.

Sollten jedoch nicht alle Messwerte als Messfehler verifiziert werden können, muss davon ausgegangen werden, dass wenigstens eine weitere Aluminiumlegierung einer anderen Gruppe im Pressblock vorhanden ist. In diesem Fall wird der Pressblock 1 der Mischgruppe MG zugeordnet.

Im Schritt C wird nun überprüft, ob der Referenzwertbereich in den die Messwerte fallen von den Referenzwertbereichen der übrigen existierenden Aluminiumlegierungsgruppen abgrenzbar ist. Wenn dem so ist, wird davon ausgegangen, dass lediglich die Aluminiumlegierungsgruppe, in deren Referenzwertbereich die Messwerte fallen, im Aluminiumpaket vorhanden ist. Das Aluminiumpaket 1 wird alsdann der entsprechenden Aluminiumlegierungsgruppe ALG zugeordnet.

Sollte der Referenzwertbereich der Aluminiumlegierungsgruppe jedoch nicht abgrenzbar sein, weil sie zum Beispiel mit dem Referenzwertbereich einer anderen Aluminiumlegierungsgruppe überlappt, bedarf es des weiteren Prüfungsschritts D.

Im Schritt D wird abgefragt, ob die potenzielle Zusammensetzung des Aluminiumpaketes 1 auf bestimmte Aluminiumlegierungsgruppen eingrenzbar ist. Dies ist zum Beispiel im Falle von Aluminiumpaketen gegeben, die aus der Automobilindustrie stammen. Diese enthalten mit Bezug auf potenzielle Aluminiumlegierungen lediglich solche der Gruppe 5xxx und/oder 6xxx. Sollte eine Eingrenzung nicht möglich sein, so wird der Aluminiumpaket 1 der Mischgruppe MG zugeordnet.

Sollte eine Eingrenzung, insbesondere auf Aluminiumlegierungen der Gruppe 5xxx und/oder 6xxx möglich sein, werden etwaige Überlappungen der Referenzwertbereiche mit potenziell nicht im Aluminiumpaket enthaltenen Gruppen für den Zuordnungsprozess ignoriert. Abschließend wird in Schritt E geprüft, ob der Referenzbereich in den die Messwerte fallen von den Referenzwertbereichen derjenigen Aluminiumlegierungsgruppen abgrenzbar ist, die im Aluminiumpaket vorhanden sein können. Bejahendenfalls wird der Aluminiumpaket 1 derjenigen Aluminiumlegierungsgruppe ALG zugeordnet, in den die Messwerte fallen. Sollte eine Abgrenzung nicht möglich sein, wird der Aluminiumpaket 1 stattdessen der Mischgruppe MG zugeordnet.

Insbesondere für Aluminiumpakete aus dem Bereich der Automobilindustrie, in der lediglich Aluminiumlegierungen der Gruppe 5xxx und 6xxx verwendet werden, die hinsichtlich ihrer elektrischen Leitfähigkeit voneinander abgegrenzt werden können, ist es möglich wenigstens 50 % der anfallenden Aluminiumpakete mit dem erfindungsgemäßen Verfahren einer bestimmten Aluminiumlegierungsgruppe zuzuordnen. Die übrigen Aluminiumpakete der Mischgruppe MG können dann aufwendigeren Partikeltrennverfahren unterzogen werden.

Insbesondere können Aluminiumpakete, an denen (bis auf Fehlmessungen) durchgehend eine Leitfähigkeit < 35 % IACS gemessen wurde, der 5xxx-Aluminiumlegierungsgruppem, und Aluminiumpakete, an denen (bis auf Fehlmessungen) durchgehend eine Leitfähigkeit von > 35 % IACS gemessen wurde, der 6xxx-Aluminiumlegierungsgruppe zugeordnet werden.

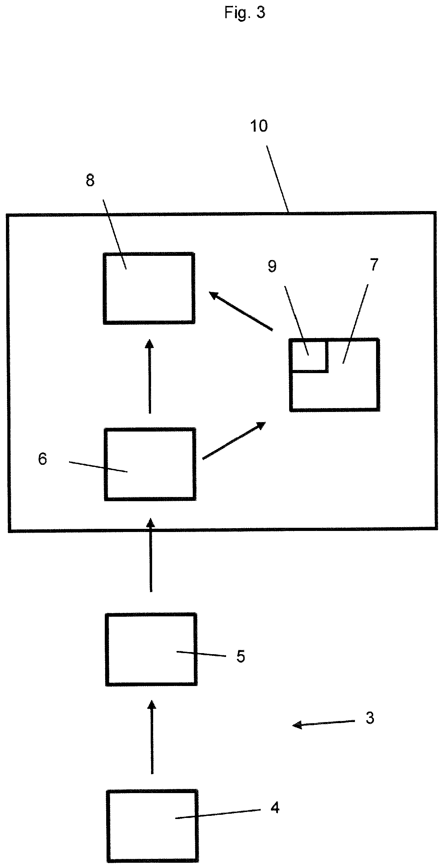

Figur 3 zeigt im Rahmen eines schematischen Flussdiagramms eine erfindungsgemäße Sortieranlage 3. Die Sortieranlage 3 verfügt über eine Zuführungseinrichtung 4. Über die Zuführungseinrichtung 4 wird die Sortieranlage 3 mit den zu sortierenden Aluminiumpaketen 1 befüllt. Im vorliegenden Beispiel ist die Zuführungseinrichtung 4 durch einen Bunker gebildet.

Aus dem Bunker 4 werden die Aluminiumpakete 1 kontinuierlich auf eine Fördereinrichtung 5 aufgegeben. Die Fördereinrichtung 5 ist im vorliegenden Beispiel als Endlosförderband ausgebildet. Die Fördereinrichtung 5 dient dem Transport der Pressblöcke 1 durch die Sortieranlage 3.

Mittels der Fördereinrichtung 5 werden die Aluminiumpakete einer Oberflächenmesseinrichtung 6 zugeführt. In der Oberflächenmesseinrichtung 6 werden die Aluminiumpakete 2 an drei Seiten hinsichtlich ihrer elektrischen Leitfähigkeit vermessen. Zu diesem Zweck stellt die Oberflächenmesseinrichtung 6 Messmittel in Form von Sensoren (nicht gezeigt) bereit. Im vorliegenden Fall weist die Oberflächenmesseinrichtung insgesamt 30 Sensoren auf, von denen jeweils 10 Sensoren die elektrische Leitfähigkeit des Aluminiumpaketes auf einer seiner Seiten und dort an unterschiedlichen Positionen messen. Die Messung der elektrischen Leitfähigkeit findet für alle Sensoren im Wesentlichen zeitgleich statt.

Die Oberflächenmesseinrichtung 6 ist vorliegend datenübertragungstechnisch mit einer Datenverarbeitungseinrichtung 7 verbunden. Über besagte Datenverbindung werden die einzelnen Messwerte der elektrischen Leitfähigkeit der einzelnen Sensoren an die Datenverarbeitungseinrichtung übertragen. Die Datenverarbeitungseinrichtung wertet die Messergebnisse alsdann automatisiert aus und ordnet die Aluminiumpakete einer Aluminiumlegierungsgruppe des Typs 5xxx, 6xxx oder einer Mischgruppe aus beiden Legierungen zu.

Nach der Messung wird das vermessene Aluminiumpaket der Sortiereinrichtung 8 zugeführt. Die Sortiereinrichtung 8 schleust das Aluminiumpaket in Abhängigkeit seiner Zuordnung aus. Zu diesem Zweck steht die Datenverarbeitungseinrichtung in datenübertragungstechnischer Kommunikation mit der Sortiereinrichtung. Zu diesem Zweck verfügt die Datenverarbeitungseinrichtung über eine Steuerungseinheit 9.

Im vorliegenden Ausführungsbeispiel sind die Oberflächenmesseinrichtung, die Datenverarbeitungseinrichtung und die Sortiereinrichtung als integrierte Baugruppe 10 ausgebildet. Die integrierte Baugruppe ist im vorliegenden Beispiel aus einem Greifroboter gebildet. Dieser Greifroboter verfügt über ein Greifwerkzeug, in welchem die vorbeschriebenen Sensoren zur Messung der elektrischen Leitfähigkeit angebracht sind. Nach der Auswertung der Messergebnisse durch die Datenverarbeitungseinrichtung sortiert der Greifroboter das vermessenen Aluminiumpaket 1 entsprechend seiner Zuordnung in eine der drei Gruppen.

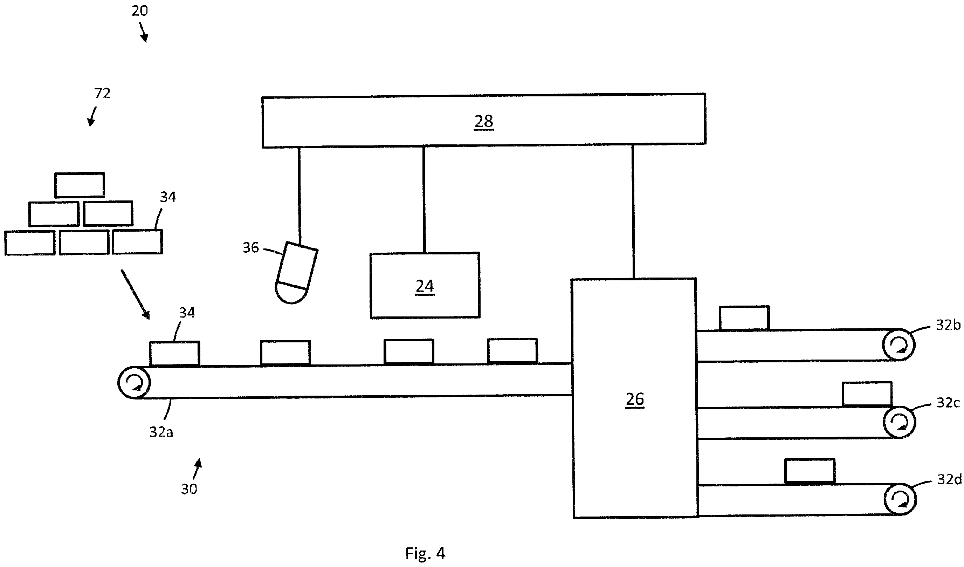

Fig. 4 zeigt ein Ausführungsbeispiel einer Sortieranlage für die Sortierung von Aluminiumpaketen, in denen flächige Aluminiumlegierungsschrottteile verpresst sind. Die Sortieranlage 20 umfasst eine Lokalisiereinrichtung 22, eine Oberflächenmesseinrichtung 24, eine Sortiereinrichtung 26, eine elektronische Datenverarbeitungseinrichtung 28 zur Steuerung der Sortieranlage 20 und ein Fördereinrichtung 30 mit mehreren Förderbändern 32a-d zum Transport von Aluminiumpaketen 34 durch die Sortieranlage 20.

Die Lokalisiereinrichtung 22 umfasst vorliegend eine Kamera 36 zur Erfassung von Bilddaten von den mit der Fördereinrichtung 30 durch die Sortieranlage 20 transportierten Aluminiumpaketen 34. Weiterhin umfasst die Lokalisiereinrichtung 22 ein Bildverarbeitungsprogramm, das auf der Datenverarbeitungseinrichtung 28 läuft und die von der Kamera 36 aufgenommenen Bilddaten verarbeitet. Das Bildverarbeitungsprogramm ist dazu eingerichtet, für die Messung der Oberflächenmesseinrichtung 24 geeignete Bereiche auf der Oberfläche eines durch die Sortieranlage 20 transportierten Aluminiumpakets 34 zu lokalisieren, insbesondere im Wesentlichen ebene Bereiche eines in dem Aluminiumpaket verpressten Aluminiumlegierungsschrottteils. Dies kann beispielsweise durch an sich bekannte Methoden zur Bildverarbeitung, insbesondere zur Konturenerkennung, erfolgen.

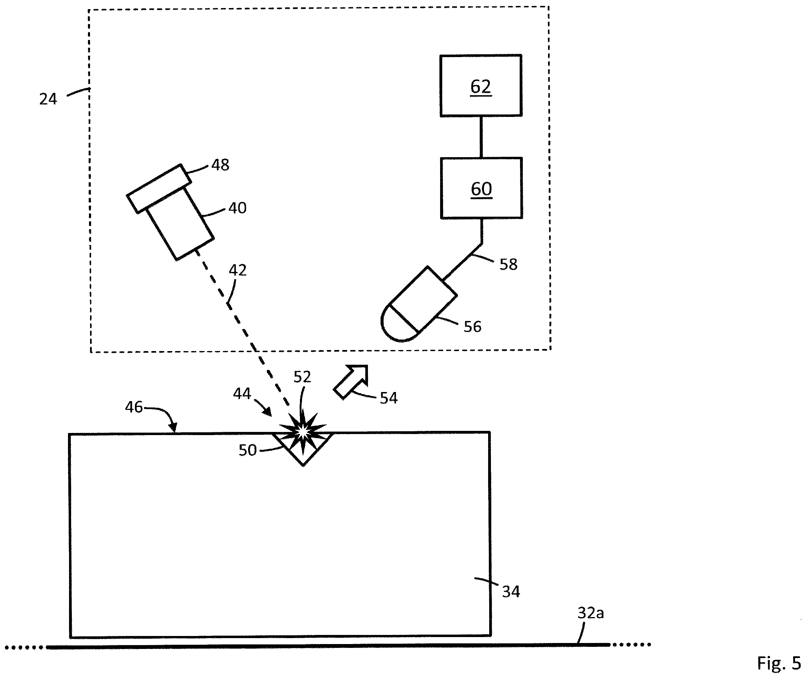

Die Oberflächenmesseinrichtung 24 ist zur Messung einer Materialeigenschaft an der Oberfläche eines durch die Sortieranlage 20 transportierten Aluminiumpakets 34 zu messen. Im vorliegenden Beispiel ist die Oberflächenmesseinrichtung 24 dazu eingerichtet, Legierungselemenent-Gehalte mittels des LIBS-Verfahrens zu bestimmen. Der Aufbau und die Funktionsweise der Oberflächenmesseinrichtung 24 werden im Folgenden anhand der Fig. 5 erläutert, die eine detailliertere schematische Darstellung der Oberflächenmesseinrichtung 24 zeigt.

Die Oberflächenmesseinrichtung 24 umfasst eine Laserquelle 40, mit der ein gepulster Laserstrahl 42 auf eine Messposition 44 an der Oberfläche 46 eines auf dem Förderband 32a beförderten Aluminiumpakets 34 gerichtet werden kann. Die Oberflächenmesseinrichtung 24 weist vorzugsweise eine Positionierungseinrichtung 48 auf, mit der sich der Laserstrahl 42 ausrichten lässt. Auf diese Weise kann die Messposition 44 auf der Oberfläche 46 gezielt ausgewählt werden. Insbesondere ist die Oberflächenmesseinrichtung 24 dazu eingerichtet, die Messposition 44 in einem von der Lokalisiereinrichtung 22 lokalisierten Bereich zu positionieren. Zusätzlich oder alternativ ist es auch denkbar, eine Positionierungseinrichtung zur Positionierung des Aluminiumpakets 34 gegenüber der Oberflächenmesseinrichtung 24 vorzusehen.

Durch den auf der Oberfläche 46 auftreffenden Laserstrahl 42 wird an der Messposition 44 ein kleines (in Fig. 5 zur Veranschaulichung übertrieben groß dargestelltes) Volumen 50 an der Oberfläche des Aluminiumpakets 34 verdampft und zu einem Plasma 52 ionisiert. Beim Zerfall des Plasmas 52 wird Licht 54 emittiert, das charakteristisch für die im Volumen 50 enthaltenen Legierungselemente ist. Durch eine spektroskopische Analyse des Lichts 54 lassen sich daher die Gehalte von ein oder mehreren Legierungselementen im Plasma 52 bestimmen und damit auf die Legierungselement-Gehalte des Volumens 50 rückschließen.

Zur spektroskopischen Analyse des Lichts 54 weist die Oberflächenmesseinrichtung 24 entsprechend eine Optik 56 auf, um das Licht 54 einzufangen und über einen Lichtleiter 58 an ein Spektrometer 60 weiterzuleiten, mit dem die Spektralverteilung des Lichts 54 analysiert werden kann. Eine an das Spektrometer angeschlossene Auswerteelektronik 62 berechnet dann aus der gemessenen Spektralverteilung die zu messenden Legierungselement-Gehalte, zum Beispiel von einer oder mehrerer der Legierungselemente Al, Mg, Mn, Fe, Si, Cu, Cr, Zn und Ti, im Volumen 50, d.h. an der Messposition 44 an der Oberfläche des Aluminiumpakets 34. Anstelle der Auswerteelektronik 62 kann die Auswertung auch in der Datenverarbeitungseinrichtung 28 erfolgen.

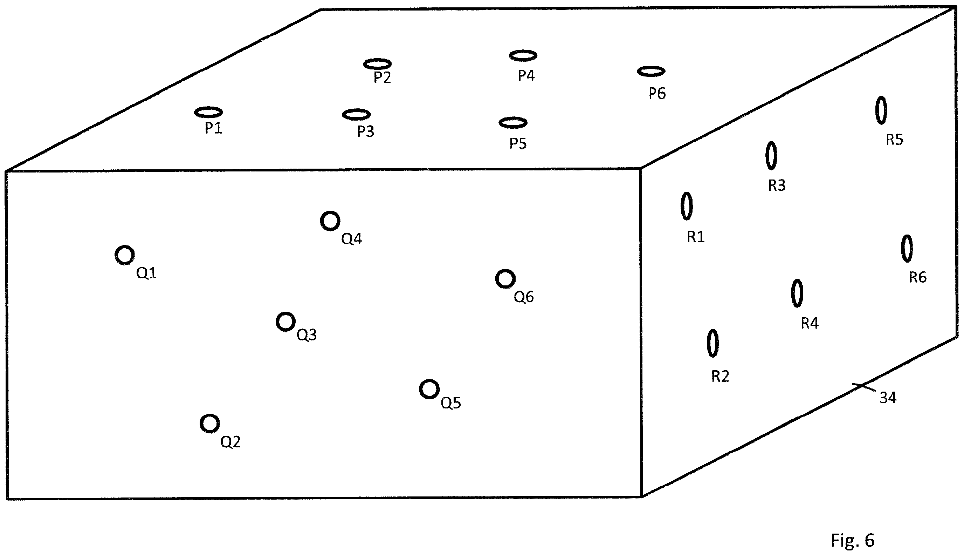

Die Oberflächenmesseinrichtung 24 ist vorzugsweise dazu eingerichtet, Legierungselement-Gehalte an verschiedenen Positionen an der Oberfläche des Aluminiumpakets 34, vorzugsweise an verschiedenen Seiten des Aluminiumpakets 34 zu messen. Fig. 6 zeigt in isometrisch schematischer Darstellung ein Aluminiumpaket 34 mit jeweils sechs Positionen P1-6, Q1-6 und R1-6 auf drei Seiten des Aluminiumpakets 34. Vorzugsweise können Messungen auch an Positionen auf einander gegenüberliegenden Seiten des Aluminiumpakets 34 erfolgen.

Die Lokalisiereinrichtung 22 ist entsprechend vorzugsweise dazu eingerichtet, mehrere für die mit der Oberflächenmesseinrichtung 24 durchzuführenden Messungen geeignete Bereiche auf verschiedenen Seiten des Aluminiumpakets 34 zu lokalisieren.

Die Messung an mehreren Positionen erhöht die Repräsentativität der Ergebnisse für die Gesamtzusammensetzung des Aluminiumpakets 34. Ergeben zum Beispiel alle oder fast alle Messungen, dass das an der jeweiligen Position gemessene Aluminiumlegierungsschrottteil aus der 5xxx-Aluminiumlegierungsgruppe stammt, so kann mit hoher Wahrscheinlichkeit daraus geschlossen werden, dass das Aluminiumpaket 34 insgesamt zu einem hohen Anteil oder ggf. sogar vollständig aus der 5xxx-Aluminiumlegierungsgruppe besteht.

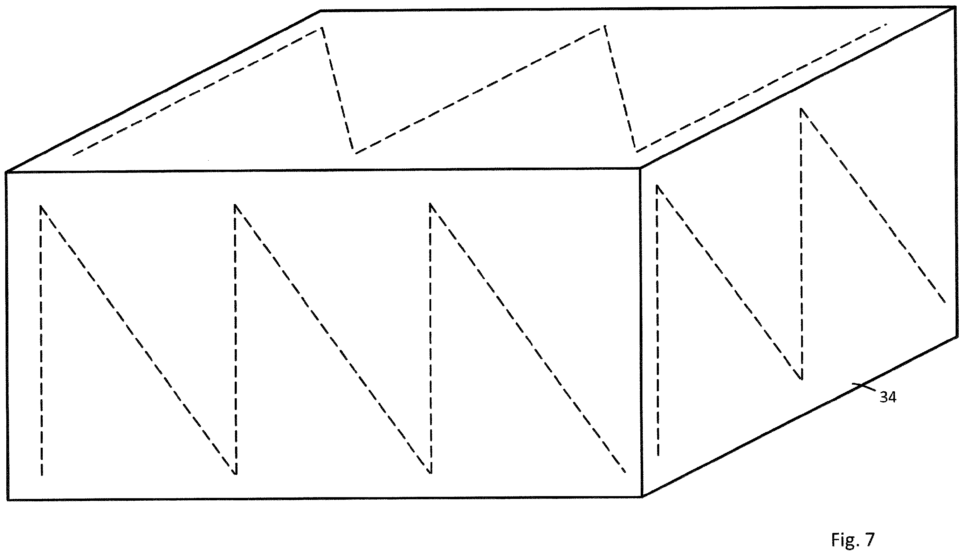

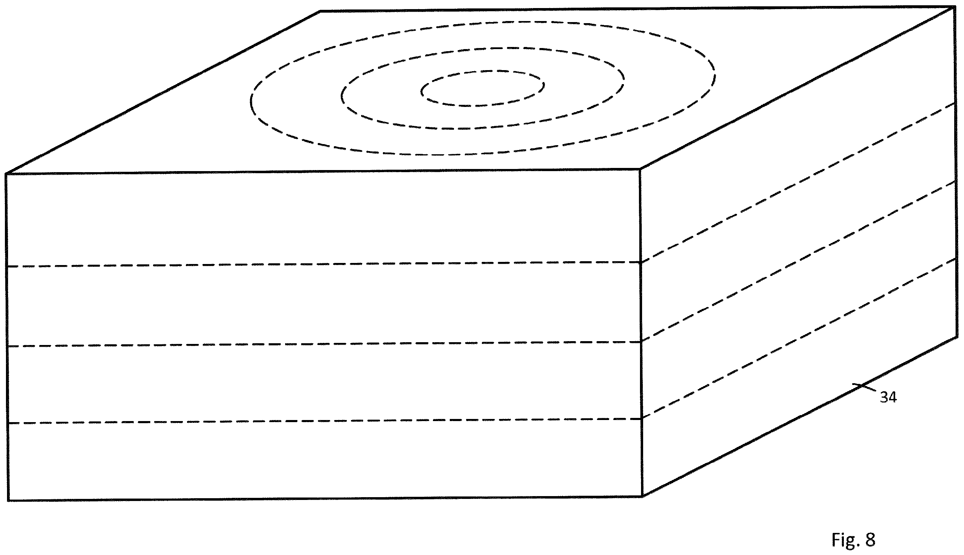

Die Figuren 7 und 8 zeigen in isometrisch schematischer Darstellung ein Aluminiumpaket 34 mit alternativen Messpositionen zur Bestimmung der Materialeigenschaft. Die Messung der Materialeigenschaft, insbesondere verschiedener Legierungselement-Gehalte, mittels LIBS erlaubt es, eine Vielzahl von Messungen an der Oberfläche des Aluminiumpakets 34 durchzuführen. Zu diesem Zweck kann der Laserstrahl 42 durch Veränderung der Laserstrahl-Richtung und/oder Bewegung des Aluminiumpakets 34 über die Oberfläche des Aluminiumpakets 34 geführt werden (in den Figuren 7 und 8 durch die gestrichelten Linien dargestellt), während das Spektrometer 60 das empfangene Licht analysiert und - entlang des Wegs des Laserstrahls 42 über die Oberfläche des Aluminiumpakets 34 - eine Vielzahl von Spektren aufnimmt. Diese Spektren können beispielsweise gruppenweise gemittelt werden, zum Beispiel jeweils alle Spektren, die innerhalb eines Verfahrwegs des Laserstrahls 42 von jeweils 1 cm über die Oberfläche des Aluminiumpakets 34 aufgenommen wurden, um die Statistik der Messungen zu verbessern. Werden zum Beispiel insgesamt 10.000 Spektren pro Seite des Aluminiumpakets 34 aufgenommen und jeweils 50 aufeinanderfolgende Spektren miteinander gemittelt, so ergeben sich im Ergebnis 200 gemittelte Spektren pro Seite des Aluminiumpakets 34, aus denen dann die Gehalte bestimmter Legierungselemente bestimmt werden können.

Nach der Bestimmung der Legierungselement-Gehalte in den vorzugsweise mehreren Bereichen an der Oberfläche des Aluminiumpakets kann die Datenverarbeitungseinrichtung 28 das Aluminiumpaket zum Beispiel einer von mehreren Aluminiumlegierungsgruppe, zum Beispiel 5xxx oder 6xxx, oder, wenn das Messergebnis nicht eindeutig zuordenbar war, einer Mischgruppe zuordnen.

Die Sortiereinrichtung 26 ist dann dazu eingerichtet, die einzelnen Aluminiumpakete 34 abhängig von der jeweiligen Zuordnung zu einer Aluminiumlegierungsgruppe bzw. Mischgruppe auszuschleusen und somit zu sortieren. In Fig. 4 ist dies schematisch durch die Aufteilung der Aluminiumpakete 34 auf drei verschiedene Förderbänder 32b-d dargestellt.

Im Folgenden soll ein möglicher Betrieb der Sortieranlage 20 anhand eines Ausführungsbeispiels des Sortierungsverfahrens unter Verwendung der in Fig. 4 dargestellten Sortieranlage 20 erläutert werden.

Bei dem Sortierungsverfahren wird zunächst ein Aluminiumpaket 34 bereitgestellt, in dem flächige Aluminiumlegierungsschrotteile verpresst sind. Vorzugsweise wird das Aluminiumpaket 34 aus einer Menge 72 von Aluminiumpaketen 34 bereitgestellt, wobei die in der Menge 72 von Aluminiumpaketen 34 verpressten Aluminiumlegierungsschrottteile zu einem überwiegenden Anteil, vorzugsweise zu mindestens 70 Gew.-%, aus Legierungszusammensetzungen aus einer Anzahl vorbekannter Aluminiumlegierungsgruppen bestehen.

Es ist demnach vorzugsweise bekannt, aus welchen Aluminiumlegierungsgruppen die Aluminiumlegierungsschrottteile im Wesentlichen bestehen. Dies ist eine typische Konstellation, da aus der Herkunft des Schrotts häufig bekannt ist, welche Legierungen in den Aluminiumpaketen im Wesentlichen auftreten können. Ist dies nicht bekannt, so kann dies beispielsweise durch stichprobenartige Untersuchung einzelner Aluminiumpakete 34 der Menge 72 festgestellt werden.

Im vorliegenden Beispiel könnten zum Beispiel mindestens 80 Gew.-% der Aluminiumlegierungsschrottteile der Aluminiumpakete 34 aus 5xxx-oder 6xxx-Legierungen bestehen. Durch das Sortierverfahren kann dann eine Aufteilung der Aluminiumpakete 34 in 5xxx-Aluminiumpakete, 6xxx-Aluminiumpakete und Misch-Aluminiumpakete erfolgen. Zu diesem Zweck werden die Aluminiumpakete 34 der Menge 72 nacheinander auf das Förderband 32a gegeben und durch die Sortieranlage 20 transportiert.

Die Lokalisiereinrichtung 22 nimmt Bilddaten von jedem Aluminiumpaket 34 auf und lokalisiert jeweils mehrere Bereiche an der Oberfläche der Aluminiumpakete 34. Die Oberflächenmesseinrichtung 24 misst dann die Mg- und Si-Gehalte an der Oberfläche der Aluminiumpakete 34, und zwar in den zuvor von der Lokalisiereinrichtung 22 lokalisierten Bereichen.

Da die Aluminiumpakete 34 im Wesentlichen aus Aluminiumlegierungsschrottteilen aus 5xxx und 6xxx bestehen, ist die Messung der Mg- und Si-Gehalte ausreichend, da diese eine eindeutige Zuordnung der einzelnen Messungen zur Aluminiumlegierungsgruppe 5xxx oder 6xxx ermöglichen. Sind im Wesentlichen alle Messungen an einem Aluminiumpaket 34 der Aluminiumlegierungsgruppe 5xxx zugeordnet, so wird das Aluminiumpaket 34 insgesamt der Aluminiumlegierungsgruppe 5xxx zugeordnet. Sind im Wesentlichen alle Messungen an einem Aluminiumpaket 34 der Aluminiumlegierungsgruppe 6xxx zugeordnet, so wird das Aluminiumpaket 34 insgesamt der Aluminiumlegierungsgruppe 6xxx zugeordnet. In allen übrigen Fällen wird das Aluminiumpaket 34 der Mischgruppe zugeordnet. Die Sortiereinrichtung 26 sortiert die Aluminiumpakete 34 dann entsprechend der jeweiligen Zuordnung, so dass die Menge 72 in drei Teilmengen sortiert wird. Die der Mischgruppe zugeordneten Aluminiumpakete 34 können dann zum Beispiel weiter zerkleinert und sortiert werden.

### Bezugszeichen

- 1: Aluminiumpaket
- 2: Aluminiumlegierungsblech
- 3: Sortieranlage
- 4: Zuführungseinrichtung
- 5: Fördereinrichtung
- 6: Oberflächenmesseinrichtung
- 7: Datenverarbeitungseinrichtung
- 8: Sortiereinrichtung
- 9: Steuerungseinheit
- 10: integrierte Baugruppe
- A-E: Prüfungsschritte
- ALG: Aluminiumlegierungsgruppe
- MG: Mischgruppe
- 20: Sortieranlage
- 22: Lokalisiereinrichtung
- 24: Oberflächenmesseinrichtung
- 26: Sortiereinrichtung
- 28: Datenverarbeitungseinrichtung
- 30: Fördereinrichtung
- 32: Transportband
- 34: Aluminiumpaket
- 36: Kamera
- 40: Laserquelle
- 42: Laserstrahl
- 44: Messposition
- 46: Oberfläche
- 48: Positionierungseinrichtung
- 50: Volumen
- 52: Plasma
- 54: Licht
- 56: Optik
- 58: Lichtleiter
- 60: Spektrometer
- 62: Auswerteelektronik
- 72: Menge an Aluminiumpaketen

## Patentansprüche

1. Sortierungsverfahren für Aluminiumpakete (1, 34), bei dem
- ein Aluminiumpaket (34) bereitgestellt wird, in dem flächige Aluminiumlegierungsschrottteile (2) verpresst sind,
- eine Materialeigenschaft an der Oberfläche (46) des Aluminiumpaketes (1, 34) gemessen wird,
- das Aluminiumpaket (1, 34) in Abhängigkeit der zuvor bestimmten Materialeigenschaft sortiert wird.

2. Verfahren gemäß Anspruch 1,
**dadurch gekennzeichnet, dass** als Materialeigenschaft die elektrische Leitfähigkeit an der Oberfläche (46) des Aluminiumpakets (1, 34) gemessen wird.

3. Verfahren gemäß Anspruch 1,
**dadurch gekennzeichnet, dass** als Materialeigenschaft ein oder mehrere Legierungselement-Gehalte an der Oberfläche (46) des Aluminiumpakets (1, 34) gemessen werden, vorzugsweise mittels eines spektroskopischen Verfahrens, insbesondere mittels LIBS oder Funkenerosionsspektroskopie.

4. Verfahren gemäß einem der Ansprüche 1 bis 3, **dadurch gekennzeichnet, dass** die Materialeigenschaft an wenigstens zwei verschiedenen Seiten des Aluminiumpaketes (1, 34) gemessen wird.

5. Verfahren gemäß einem der Ansprüche 1 bis 4, **dadurch gekennzeichnet, dass** die Materialeigenschaft an einer Mehrzahl von verschiedenen Positionen (P1-6, Q1-6, R1-6) an der Oberfläche (46) des Aluminiumpaketes (1, 34) gemessen wird, insbesondere zeitgleich.

6. Verfahren gemäß einem der Ansprüche 1 bis 5,
**dadurch gekennzeichnet, dass** das Aluminiumpaket (1, 34) aus einer Menge (72) von Aluminiumpaketen (1, 34) bereitgestellt wird, in denen jeweils flächige Aluminiumlegierungsschrottteile (2) verpresst sind, wobei die in der Menge (72) von Aluminiumpaketen (1, 34) verpressten Aluminiumlegierungsschrottteile (2) zu einem überwiegenden Anteil aus Legierungszusammensetzungen aus einer Anzahl vorbekannter Aluminiumlegierungsgruppen bestehen.

7. Verfahren gemäß einem der Ansprüche 1 bis 6, **dadurch gekennzeichnet, dass** die gemessenen Werte für die Materialeigenschaft mit Referenzwertbereichen verglichen werden, die für verschiedene Aluminiumlegierungsgruppen spezifisch sind, wobei das Aluminiumpaket (1, 34) bei Übereinstimmung der gemessenen Werte mit nur einem Referenzwertbereich derjenigen Aluminiumlegierungsgruppe zugeordnet wird, für die der Referenzwertbereich spezifisch ist.

8. Verfahren gemäß Anspruch 7, **dadurch gekennzeichnet, dass** das Aluminiumpaket (1, 34) einer Mischgruppe zugeordnet wird, wenn wenigstens einer der gemessenen Werte mit einem Referenzwertbereich für eine erste Aluminiumlegierungsgruppe und wenigstens einer der übrigen gemessenen Werte mit einem Referenzwertbereich für eine zweite Aluminiumlegierungsgruppe übereinstimmt.

9. Verfahren gemäß einem der Ansprüche 1 bis 8, **gekennzeichnet durch** einen zusätzlichen Verfahrensschritt, bei dem das Aluminiumpaket (1, 34) vorzugsweise vor der Messung der Materialeigenschaft auf magnetische Bestandteile hin überprüft wird.

10. Verfahren gemäß einem der Ansprüche 1 bis 9,
**dadurch gekennzeichnet,**
- **dass** an der Oberfläche (46) des Aluminiumpakets (1, 34) ein für die Messung der Materialeigenschaft geeigneter Bereich, vorzugsweise ein im Wesentlichen ebener Bereich eines Aluminiumlegierungsschrottteils (2), lokalisiert wird und
- **dass** die Materialeigenschaft in dem lokalisierten Bereich an der Oberfläche (46) des Aluminiumpaketes (1, 34) gemessen wird.

11. Sortieranlage (3, 20) für die Sortierung von Aluminiumpaketen (1, 34), in denen flächige Aluminiumlegierungsschrottteile (2) verpresst sind, mit
- einer Oberflächenmesseinrichtung (6, 24) zur Messung einer Materialeigenschaft, insbesondere der elektrischen Leitfähigkeit oder ein oder mehrerer Legierungselement-Gehalte, an der Oberfläche (46) der Aluminiumpakete (1, 34),
- einer Sortiereinrichtung (8, 26) zur Ausschleusung der Aluminiumpakete (1, 34).

12. Sortieranlage gemäß Anspruch 11, **dadurch gekennzeichnet, dass** die Oberflächenmesseinrichtung (6, 24) wenigstens ein Messmittel zur Messung der Materialeigenschaft, insbesondere der elektrischen Leitfähigkeit oder der Legierungselement-Gehalte, an verschiedenen Positionen der Oberfläche eines Aluminiumpaketes (1,34) aufweist.

13. Sortieranlage gemäß einem der Ansprüche 11 oder 12, **gekennzeichnet durch** eine elektronische Datenverarbeitungseinrichtung (7, 28) zur automatisierten Auswertung der Messergebnisse der Materialeigenschaft und der automatisierten Zuordnung der Aluminiumpakete (1, 34) zu einer Aluminiumlegierungsgruppe.

14. Sortieranlage gemäß einem der Ansprüche 11 bis 13, **dadurch gekennzeichnet, dass** die Oberflächenmesseinrichtung (6, 24) und die Sortiereinrichtung (8, 26) als integrierte Baugruppe ausgebildet sind.

15. Sortieranlage gemäß einem der Ansprüche 11 bis 14, weiter umfassend eine Lokalisiereinrichtung (22) eingerichtet zur Lokalisierung eines für eine von der Oberflächenmesseinrichtung durchzuführende Messung geeigneten Bereichs, vorzugsweise eines im Wesentlichen ebenen Bereichs eines Aluminiumlegierungsschrottteils (2), an der Oberfläche (46) eines Aluminiumpakets (1, 34).

## Claims

1. Method for sorting aluminium packages (1, 34) in which
- an aluminium package (34) is provided, in which flat aluminium alloy scrap pieces (2) are pressed,
- a material property is measured at the surface (46) of the aluminium package (1, 34),
- the aluminium package (1, 34) is sorted according to the previously determined material property.

2. Method according to claim 1,
**characterised in that** electrical conductivity is measured at the surface (46) of the aluminium package (1, 34) as the material property.

3. Method according to claim 1,
**characterised in that** one or a plurality of alloy element contents are measured at the surface (46) of the aluminium package (1, 34) as the material property, preferably by means of a spectroscopic method, in particular by means of LIBS or spark erosion spectroscopy.

4. Method according to any one of claims 1 to 3, **characterised in that** the material property is measured on at least two different sides of the aluminium package (1, 34).

5. Method according to any one of claims 1 to 4, **characterised in that** the material property is measured at a plurality of different positions (P1-6, Q1-6, R1-6) at the surface (46) of the aluminium package (1, 34), in particular simultaneously.

6. Method according to any one of claims 1 to 5,
**characterised in that** the aluminium package (1, 34) is provided from an amount (72) of aluminium packages (1, 34), in each of which flat aluminium alloy scrap pieces (2) are pressed, wherein the aluminium alloy scrap pieces (2) pressed in the amount (72) of aluminium packages (1, 34) consist, to a predominant extent, of alloy compositions from a number of previously known aluminium alloy groups.

7. Method according to any one of claims 1 to 6, **characterised in that** the measured values for the material property are compared with reference value ranges that are specific to different aluminium alloy groups, wherein the aluminium package (1,34) is assigned to the aluminium alloy group for which the reference value range is specific if the measured values correspond to only one reference value range.

8. Method according to claim 7, **characterised in that** the aluminium package (1, 34) is assigned to a mixed group if at least one of the measured values matches a reference value range for a first aluminium alloy group and at least one of the other measured values matches a reference value range for a second aluminium alloy group.

9. Method according to any one of claims 1 to 8, **characterised by** an additional method step in which the aluminium package (1, 34) is checked for magnetic components preferably before the measurement of the material property.

10. Method according to any one of claims 1 to 9,
**characterised in that**
- a region, preferably a substantially flat region of an aluminium alloy scrap piece (2), that is suitable for the measurement of the material property is located at the surface (46) of the aluminium package (1, 34), and
- the material property is measured in the region located at the surface (46) of the aluminium package (1, 34).

11. Sorting apparatus (3, 20) for sorting aluminium packages (1, 34) in which flat aluminium alloy scrap pieces (2) are pressed, having
- a surface measurement device (6, 24) for measuring a material property, in particular the electrical conductivity or one or a plurality of alloy element contents, at the surface (46) of the aluminium packages (1, 34),
- a sorting device (8, 26) for extracting the aluminium packages (1, 34).

12. Sorting apparatus according to claim 11, **characterised in that** the surface measurement device (6, 24) has at least one measuring means for measuring the material property, in particular the electrical conductivity or the alloy element contents, on different positions of the surface of an aluminium package (1, 34).

13. Sorting apparatus according to any one of claims 11 or 12, **characterised by** an electronic data processing device (7, 28) for automated analysis of the measurement results of the material property and automated assignment of the aluminium packages (1, 34) to an aluminium alloy group.

14. Sorting apparatus according to any one of claims 11 to 13, **characterised in that** the surface measurement device (6, 24) and the sorting device (8, 26) are designed as an integrated assembly.

15. Sorting apparatus according to any one of claims 11 to 14, further comprising a location device (22) configured for locating a region, preferably a substantially flat region of an aluminium scrap piece (2), that is suitable for the measurement to be carried out by the surface measurement device at the surface (46) of an aluminium package (1, 34).

## Revendications

1. Procédé de triage pour des paquets en aluminium (1, 34), au cours duquel
- un paquet d'aluminium (34) est mis à disposition, dans lequel sont pressés des morceaux de déchets métalliques plats en alliage d'aluminium (2),
- une propriété du matériau est mesurée sur la surface (46) du paquet d'aluminium (1, 34),
- le paquet d'aluminium (1, 34) est trié en fonction de la propriété du matériau préalablement déterminée.

2. Procédé selon la revendication 1,
**caractérisé en ce que** la conductivité électrique à la surface (46) du paquet d'aluminium (1, 34) est mesurée en tant que propriété du matériau.

3. Procédé selon la revendication 1,
**caractérisé en ce qu'**une ou plusieurs teneurs en élément d'alliage à la surface (46) du paquet d'aluminium (1, 34) sont mesurées en tant que propriété du matériau, de préférence à l'aide d'un procédé spectroscopique, de préférence par LIBS ou par spectroscopie par étincelage érosif.

4. Procédé selon l'une des revendications 1 à 3, **caractérisé en ce que** la propriété du matériau est mesurée au niveau d'au moins deux côtés différents du paquet d'aluminium (1, 34).

5. Procédé selon l'une des revendications 1 à 4, **caractérisé en ce que** la propriété du matériau est mesurée au niveau d'une pluralité d'emplacements différents (Pl-6, Q1-6, R1-6) à la surface (46) du paquet d'aluminium (1, 34), de préférence simultanément.

6. Procédé selon l'une des revendications 1 à 5,
**caractérisé en ce que** le paquet d'aluminium (1, 34) est mis à disposition à partir d'une quantité (72) de paquets d'aluminium (1, 34), dans chacun desquels sont pressés des morceaux de déchets métalliques plats en alliage d'aluminium (2), où les morceaux de déchets métalliques plats en alliage d'aluminium (2) pressés dans la quantité (72) de paquets d'aluminium (1, 34) se composent, en majorité, de compositions d'alliage provenant d'un certain nombre de groupes d'alliage d'aluminium connus au préalable.

7. Procédé selon l'une des revendications 1 à 6, **caractérisé en ce que** les valeurs mesurées pour la propriété du matériau sont comparées à des plages de valeurs de référence spécifiques à différents groupes d'alliage d'aluminium, le paquet d'aluminium (1, 34) étant associé, si les valeurs mesurées concordent, avec une seule plage de valeurs de référence du groupe d'alliage d'aluminium pour lequel la plage de valeurs de référence est spécifique.

8. Procédé selon la revendication 7, **caractérisé en ce que** le paquet d'aluminium (1, 34) est associé à un groupe mixte si au moins une des valeurs mesurées coïncide avec une plage de valeurs de référence pour un premier groupe d'alliage d'aluminium et si au moins une des autres valeurs mesurées coïncide avec une plage de valeurs de référence pour un deuxième groupe d'alliage d'aluminium.

9. Procédé selon l'une des revendications 1 à 8, **caractérisé par** une étape de procédé supplémentaire, au cours de laquelle le paquet d'aluminium (1, 34) est examiné pour détecter les composants magnétiques de préférence avant de mesurer la propriété du matériau.

10. Procédé selon l'une des revendications 1 à 9,
**caractérisé**
- **en ce qu'**à la surface (46) du paquet d'aluminium (1, 34), une zone appropriée pour la mesure de la propriété du matériau, de préférence une zone sensiblement plane d'un morceau de déchet métallique plat en alliage d'aluminium (2), est localisée, et
- **en ce que** la propriété du matériau est mesurée dans la zone localisée à la surface (46) du paquet d'aluminium (1, 34).

11. Installation de triage (3, 20) pour le triage de paquets d'aluminium (1, 34), dans lesquels sont pressés des morceaux de déchets métalliques plats en alliage d'aluminium (2), avec
- un dispositif de mesure de surface (6, 24) pour mesurer une propriété du matériau, en particulier la conductivité électrique ou une ou plusieurs teneurs en élément d'alliage à la surface (46) des paquets d'aluminium (1, 34),
- un dispositif de triage (8, 26) pour l'évacuation des paquets d'aluminium (1, 34).

12. Installation de triage selon la revendication 11, **caractérisée en ce que** le dispositif de mesure de surface (6, 24) présente au moins un moyen de mesure pour mesurer la propriété du matériau, en particulier la conductivité électrique ou les teneurs en élément d'alliage, à des emplacements différents de la surface d'un paquet d'aluminium (1, 34).

13. Installation de triage selon l'une des revendications 11 ou 12, **caractérisée par** un dispositif électronique de traitement des données (7, 28) pour l'analyse automatisée des résultats de mesure de la propriété du matériau et l'affectation automatisée des paquets en aluminium (1, 34) à un groupe d'alliage d'aluminium.

14. Installation de triage selon l'une des revendications 11 à 13, **caractérisée en ce que** le dispositif de mesure de surface (6, 24) et le dispositif de triage (8, 26) sont conçus en tant qu'unité de construction intégrée.

15. Installation de triage selon l'une des revendications 11 à 14, comportant en outre un dispositif de localisation (22) conçu pour localiser une zone appropriée pour une mesure à effecteur par le dispositif de mesure de surface, de préférence une zone sensiblement plane d'un morceau de déchet métallique plat en alliage d'aluminium (2) à la surface (46) d'un paquet d'aluminium (1, 34).
